# EUROPEAN PATENT APPLICATION

(11) **EP 3 557 562 A1**
(43) Date of publication of application: **23.10.2019**
(21) Application number: 19170585.4
(22) Date of filing: 23.04.2019
(51) Int. Cl.: G09B 19/24, G06F 17/50

(54) **GAMING IN WELDING TRAINING**

(30) Priority: 19.04.2018 US 201862659729 P; 27.03.2019 US 201916366324
(71) Applicant: Lincoln Global, Inc., Santa Fe Springs, CA 90670 (US)
(72) Inventor: MEESS, Brian, Cleveland, OH Ohio 44102 (US); Scales, Jason A., Perry, OH Ohio 44081 (US); Matthews, William Thomas, Chesterland, OH Ohio 44026 (US); Bronstrup, John Thomas, Brecksville, OH Ohio 44141 (US)
(74) Representative: Grosse Schumacher Knauer von Hirschhausen

(57) **Abstract**

Welding training systems (100, 2000, 2100, 2200, 2300, 2400) and methods utilize gaming concepts to encourage user participation and focus. The system (100, 2000, 2100, 2200, 2300, 2400) sand methods can also manage competitive activities amongst multiple users (2002).

## Description

### FIELD OF THE INVENTION

The invention is related to a welding simulator according to claim 1 and to a welding training system according to claims 10 and 14. This U.S. patent application claims the benefit of and priority to U.S. provisional patent application Ser. No. 62/659,729 filed on April 19, 2018, the entire disclosure of which is incorporated herein by reference.

The general inventive concepts relate to simulated welding training and, more particularly, to systems for and methods of introducing gaming concepts into simulated welding training.

### TECHNICAL BACKGROUND

Learning how to arc weld traditionally takes many hours of instruction, training, and practice. There are many different types of arc welding and arc welding processes that can be learned. Conventionally, welding has been learned by a student using a real welding system to perform actual welding operations on real metal pieces. Such real-world training can tie up scarce welding resources, use up limited and/or costly welding materials, and present safety concerns. Recently, however, the idea of training using welding simulators has become more popular. For example, training in a virtual reality (VR) welding environment or an augmented reality (AR) welding environment can avoid many of the drawbacks of real-world welding training.

Typically, learning a skill via welding training requires performing the same exercise over and over again until proficiency is achieved. This is true for both real-world welding training and simulated welding training. Thus, welding training can seem monotonous to a user, making it difficult to hold a user's interest/focus over time. Accordingly, there is an unmet need for welding training systems and methods that can maintain a user's focus during welding training, both during a single welding exercise and across a series of welding exercises.

### DESCRIPTION

In order to improve welding training, a welding simulator according to claim 1 is described and a welding training system according to claims 10 and 14. Preferred embodiments are subject of the subclaims. It is proposed herein to provide systems for and methods of performing welding training that introduce gaming concepts into the training to motivate the user to maintain focus and/or to promote improved performance by the user.

In one exemplary embodiment a welding simulator is provided that comprises a display; a mock welding tool; a coupon; and logic comprising a memory storing machine-readable instructions and a processor for executing the instructions to: generate a simulated environment; track movements of the mock welding tool relative to the coupon by a user during a first simulated welding exercise; display the simulated environment and the movements on the display; determine values for a plurality of performance parameters based on the movements; and calculate a performance score of the user for the first simulated welding exercise by comparing the values of the performance parameters to predefined values.

In some exemplary embodiments, the logic permits the user to perform a second simulated welding exercise only if the performance score of the user meets a pre-defined threshold score for the first simulated welding exercise.

In some exemplary embodiments, the logic permits the user to perform a second simulated welding exercise only if the performance score of the user meets a pre-defined threshold score for the first simulated welding exercise over a number of consecutive performances of the first simulated welding exercise. In some exemplary embodiments, the number of consecutive performances is at least three. In some exemplary embodiments, the logic causes the number of consecutive performances wherein the performance score of the user meets the threshold to be displayed on the display.

In some exemplary embodiments, the logic causes the performance score of the user to be displayed on the display during a performance of the first simulated welding exercise by another user.

In some exemplary embodiments, the logic causes the performance score of the user to be displayed on the display during a subsequent performance of the first simulated welding exercise by the user.

In some exemplary embodiments, the logic causes every performance score calculated for the first simulated welding exercise over a period of time to be stored; and the logic causes a highest of the stored performance scores to be displayed on the display during each performance of the first simulated welding exercise over the period of time. In some exemplary embodiments, the period of time is one week. In some exemplary embodiments, the period of time is configurable by an administrator.

In some exemplary embodiments, the logic causes every performance score calculated for the first simulated welding exercise over a period of time to be stored; and the logic causes all of the stored performance scores to be displayed on a common display viewable by multiple users at the same time. In some exemplary embodiments, the stored performance scores are displayed in descending order. In some exemplary embodiments, the period of time is one week. In some exemplary embodiments, the period of time is configurable by an administrator.

In some exemplary embodiments, the logic causes every performance score calculated for the first simulated welding exercise over a period of time to be stored; and the logic causes a given number of the stored performance scores to be displayed on a common display viewable by multiple users at the same time. In some exemplary embodiments, the given number of the stored performance scores are displayed in descending order. In some exemplary embodiments, the given number of the stored performance scores that are displayed is within the range of 3 to 20. In some exemplary embodiments, the period of time is one week. In some exemplary embodiments, the period of time is configurable by an administrator.

In some exemplary embodiments, at least one of the performance parameters is a distance between a tip of the mock welding tool and the coupon. In some exemplary embodiments, at least one of the performance parameters is a weld angle. In some exemplary embodiments, at least one of the performance parameters is a travel angle. In some exemplary embodiments, at least one of the performance parameters is a travel speed of the mock welding tool during the first simulated welding exercise.

In some exemplary embodiments, the display is part of a welding helmet.

In some exemplary embodiments, the logic causes the performance score of the user to be stored.

In some exemplary embodiments, the simulated environment is a virtual reality environment. In some exemplary embodiments, the simulated environment is an augmented reality environment.

In one exemplary embodiment, a welding training system is provided that comprises a first welding simulator including a first display, a first mock welding tool, and a first coupon; a second welding simulator including a second display, a second mock welding tool, and a second coupon; and logic comprising a memory storing machine-readable instructions and a processor for executing the instructions to: generate a simulated environment; track first movements of the first mock welding tool relative to the first coupon by a first user during a simulated welding exercise; display the simulated environment and the first movements on the first display; determine first values for a plurality of performance parameters based on the first movements; calculate a first performance score of the first user for the simulated welding exercise by comparing the first values of the performance parameters to corresponding predefined values; track second movements of the second mock welding tool relative to the second coupon by a second user during the simulated welding exercise; display the simulated environment and the second movements on the second display; determine second values for the performance parameters based on the second movements; and calculate a second performance score of the second user for the simulated welding exercise by comparing the second values of the performance parameters to the predefined values.

In some exemplary embodiments, the logic causes a progress of the first user performing the simulated welding exercise to be displayed on the second display.

In some exemplary embodiments, the logic causes a progress of the second user performing the simulated welding exercise to be displayed on the first display.

In some exemplary embodiments, the logic determines the larger of the first performance score and the second performance score is a winning score; and the logic causes the winning score to be displayed on both the first display and the second display.

In some exemplary embodiments, if the logic determines the first user completes the simulated welding exercise before the second user, the logic causes the first performance score to be displayed on the second display.

In some exemplary embodiments, if the logic determines the second user completes the simulated welding exercise before the first user, the logic causes the second performance score to be displayed on the first display.

In one exemplary embodiment a welding training system is provided that comprises a first training site, at which are located: a first welding simulator including a first display, a first mock welding tool, and a first coupon; a second welding simulator including a second display, a second mock welding tool, and a second coupon; and first logic comprising a memory storing machine-readable instructions and a processor for executing the instructions to: generate a first simulated environment, track first movements of the first mock welding tool relative to the first coupon by a first user during a simulated welding exercise, display the first simulated environment and the first movements on the first display, determine first values for a plurality of performance parameters based on the first movements, calculate a first performance score of the first user for the simulated welding exercise by comparing the first values of the performance parameters to corresponding predefined values, track second movements of the second mock welding tool relative to the second coupon by a second user during the simulated welding exercise, display the first simulated environment and the second movements on the second display, determine second values for the performance parameters based on the second movements; and calculate a second performance score of the second user for the simulated welding exercise by comparing the second values of the performance parameters to the predefined values; and a second training site, at which are located: a third welding simulator including a third display, a third mock welding tool, and a third coupon; a fourth welding simulator including a fourth display, a fourth mock welding tool, and a fourth coupon; and second logic comprising a memory storing machine-readable instructions and a processor for executing the instructions to: generate a second simulated environment, track third movements of the third mock welding tool relative to the third coupon by a third user during the simulated welding exercise, display the second simulated environment and the third movements on the third display, determine third values for a plurality of performance parameters based on the third movements, calculate a third performance score of the third user for the simulated welding exercise by comparing the third values of the performance parameters to the predefined values, track fourth movements of the fourth mock welding tool relative to the fourth coupon by a fourth user during the simulated welding exercise, display the second simulated environment and the fourth movements on the fourth display, determine fourth values for the performance parameters based on the fourth movements, and calculate a fourth performance score of the fourth user for the simulated welding exercise by comparing the fourth values of the performance parameters to the predefined values, wherein the first logic is operable to send at least one of the first performance score and the second performance score over a network to the second logic; and wherein the second logic is operable to send at least one of the third performance score and the fourth performance score over the network to the first logic.

In some exemplary embodiments, the first logic is operable to sum the first performance score and the second performance score into an aggregate score, and the first logic is operable to send the aggregate score over the network to the second logic.

In some exemplary embodiments, the second logic is operable to sum the third performance score and the fourth performance score into an aggregate score, and the second logic is operable to send the aggregate score over the network to the first logic.

In some exemplary embodiments, the first logic is operable to calculate an average score from the first performance score and the second performance score, and the first logic is operable to send the average score over the network to the second logic.

In some exemplary embodiments, the second logic is operable to calculate an average score from the third performance score and the fourth performance score, and the second logic is operable to send the average score over the network to the second logic.

In some exemplary embodiments, the first site and the second site are remote from one another. In some exemplary embodiments, the first site and the second site are separated by a distance of more than one mile.

In some exemplary embodiments, the first welding simulator and the second welding simulator are local to one another. In some exemplary embodiments, the first welding simulator and the second welding simulator are separated by a distance of less than one mile.

In some exemplary embodiments, the third welding simulator and the fourth welding simulator are local to one another. In some exemplary embodiments, the third welding simulator and the fourth welding simulator are separated by a distance of less than one mile.

In some exemplary embodiments, the network is the Internet.

Numerous other aspects, advantages, and/or features of the general inventive concepts will become more readily apparent from the following detailed description of exemplary embodiments, from the claims, and from the accompanying drawings being submitted herewith.

### BRIEF DESCRIPTION OF THE DRAWINGS

FIG. 1 illustrates an example embodiment of a system block diagram of a system providing arc welding training in a real-time virtual reality environment;
FIG. 2 illustrates an example embodiment of a combined simulated welding console and observer display device (ODD) of the system of FIG. 1;
FIG. 3 illustrates an example embodiment of the observer display device (ODD) of FIG. 2;
FIG. 4 illustrates an example embodiment of a front portion of the simulated welding console of FIG. 2 showing a physical welding user interface (WUI);
FIG. 5 illustrates an example embodiment of a mock welding tool (MWT) of the system of FIG. 1;
FIG. 6 illustrates an example embodiment of a table/stand (T/S) of the system of FIG. 1;
FIG. 7A illustrates an example embodiment of a pipe welding coupon (WC) of the system of FIG. 1;
FIG. 7B illustrates the pipe WC of FIG. 7A mounted in an arm of the table/stand (TS) of FIG. 6;
FIG. 8 illustrates various elements of an example embodiment of the spatial tracker (ST) of FIG. 1;
FIG. 9A illustrates an example embodiment of a face-mounted display device (FMDD) of the system of FIG. 1;
FIG. 9B is an illustration of how the FMDD of FIG. 9A is secured on the head of a user;
FIG. 9C illustrates an example embodiment of the FMDD of FIG. 9A mounted within a welding helmet;
FIG. 10 illustrates an example embodiment of a subsystem block diagram of a programmable processor-based subsystem (PPS) of the system of FIG. 1;
FIG. 11 illustrates an example embodiment of a block diagram of a graphics processing unit (GPU) of the PPS of FIG. 10;
FIG. 12 illustrates an example embodiment of a functional block diagram of the system of FIG. 1,
FIG. 13 is a flow chart of an embodiment of a method of training using the virtual reality training system of FIG. 1;
FIGS. 14A-14B illustrate the concept of a welding pixel (wexel) displacement map;
FIG. 15 illustrates an example embodiment of a coupon space and a weld space of a flat welding coupon simulated in the simulator;
FIG. 16 illustrates an example embodiment of a coupon space and a weld space of a corner welding coupon simulated in the simulator;
FIG. 17 illustrates an example embodiment of a coupon space and a weld space of a pipe welding coupon simulated in the simulator;
FIG. 18 illustrates an example embodiment of the pipe welding coupon;
FIGS. 19A-19C illustrate an example embodiment of the concept of a dual-displacement puddle model of the simulator;
FIG. 20 illustrates an example embodiment of a system that uses prior performance data for motivational purposes during welding training.
FIG. 21 illustrates an example embodiment of a system that manages competition amongst multiple users during welding training.
FIG. 22 illustrates an example embodiment of a system that manages competition amongst multiple organizations during welding training.
FIGS. 23A-23C illustrate an example embodiment of a system that manages access to welding training exercises based on predefined conditions.
FIGS. 24A-24C illustrate an example embodiment of a system that manages access to welding training modules based on predefined conditions.

### DESCRIPTION

The general inventive concepts encompass systems for and methods of performing simulated welding training, wherein gaming concepts are introduced into the training to motivate the user to maintain focus and/or to promote improved performance by the user. The gaming concepts can also be used to foster competition amongst multiple users and/or groups.

A virtual reality arc welding (VRAW) system is described herein, as an exemplary embodiment of a welding simulator, to put in context the idea of training in a virtual reality welding environment. Subsequently, a learning management system (LMS) is described herein in the context of collecting data from one or more VRAW systems (or similar virtual reality welding systems) and storing and analyzing the data. The data may be representative of simulated welding operations performed by student welders on the VRAW systems, and analysis of the data may be initiated by a welding instructor, for example, to track student progress and provide proper feedback to a student welder.

### Virtual Reality Arc Welding System

An embodiment of the present invention provides one or more virtual reality arc welding (VRAW) systems each having a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. The system is capable of simulating, in a virtual reality space, a weld puddle having real-time molten metal fluidity and heat dissipation characteristics. The system is also capable of displaying the simulated weld puddle on the display device in real-time. The real-time molten metal fluidity and heat dissipation characteristics of the simulated weld puddle provide real-time visual feedback to a user of the mock welding tool when displayed, allowing the user to adjust or maintain a welding technique in real-time in response to the real-time visual feedback (i.e., helps the user learn to weld correctly). The displayed weld puddle is representative of a weld puddle that would be formed in the real world based on the user's welding technique and the selected welding process and parameters. By viewing a puddle (e.g., shape, color, slag, size, stacked dimes), a user can modify his technique to make a good weld and determine the type of welding being done. The shape of the puddle is responsive to the movement of the gun or stick. As used herein, the term "real-time" means perceiving and experiencing in time in a simulated environment in the same way that a user would perceive and experience in a real-world welding scenario. Furthermore, the weld puddle is responsive to the effects of the physical environment including gravity, allowing a user to realistically practice welding in various positions including overhead welding and various pipe welding angles (e.g., 1G, 2G, 5G, 6G). The system is further capable of saving data associated with a simulated virtual reality welding session for a user (e.g., a student welder).

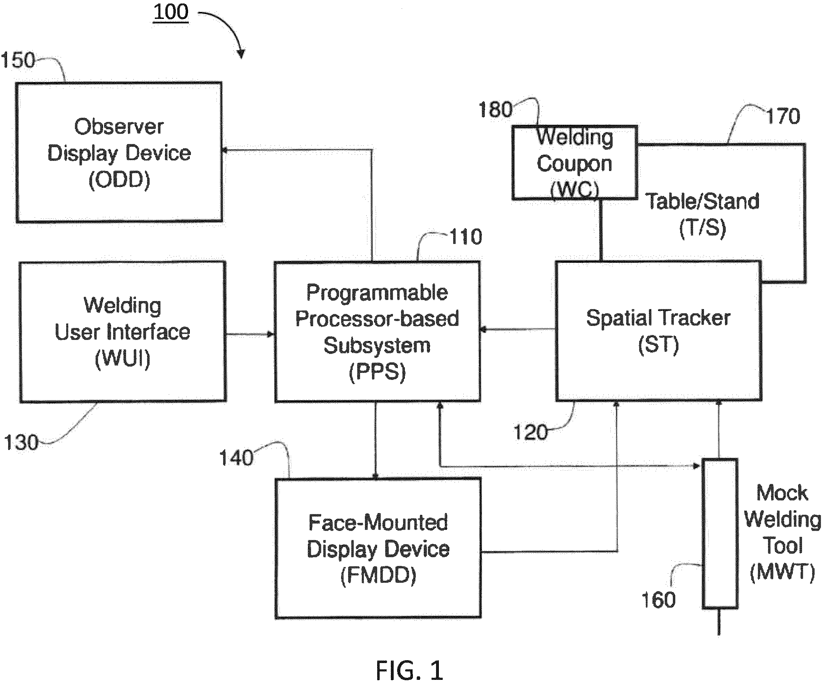

FIG. 1 illustrates an example embodiment of a system block diagram of a system 100 providing arc welding training in a real-time simulated (e.g., virtual reality) environment. The system 100 includes a programmable processor-based subsystem (PPS) 110 having processing units and computer memory. The system 100 further includes a spatial tracker (ST) 120 operatively connected to the PPS 110. The system 100 also includes a physical welding user interface (WUI) 130 operatively connected to the PPS 110 and a face-mounted display device (FMDD) 140 operatively connected to the PPS 110 and the ST 120. The system 100 further includes an observer display device (ODD) 150 operatively connected to the PPS 110. The system 100 also includes at least one mock welding tool (MWT) 160 operatively connected to the ST 120 and the PPS 110. The system 100 further includes a table/stand (T/S) 170 and at least one welding coupon (WC) 180 capable of being attached to the T/S 170. In accordance with an alternative embodiment of the present invention, a mock gas bottle (not shown) could be provided to simulate a source of shielding gas having an adjustable flow regulator.

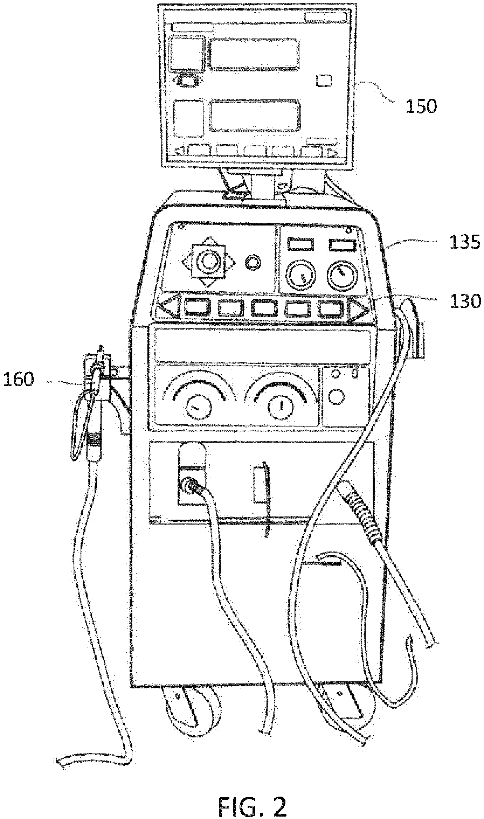

FIG. 2 illustrates an example embodiment of a combined simulated welding console 135 (simulating a welding power source user interface) and observer display device (ODD) 150 of the system 100 of FIG. 1. The physical WUI 130 resides on a front portion of the console 135 and provides knobs, buttons, and a joystick for user selection of various modes and functions. The ODD 150 is attached to a top portion of the console 135. The MWT 160 rests in a holder attached to a side portion of the console 135. Internally, the console 135 holds the PPS 110 and a portion of the ST 120. In accordance with an alternative embodiment, the selection of the modes and functions provided by the WUI 130 may be in the form of a touch-screen display.

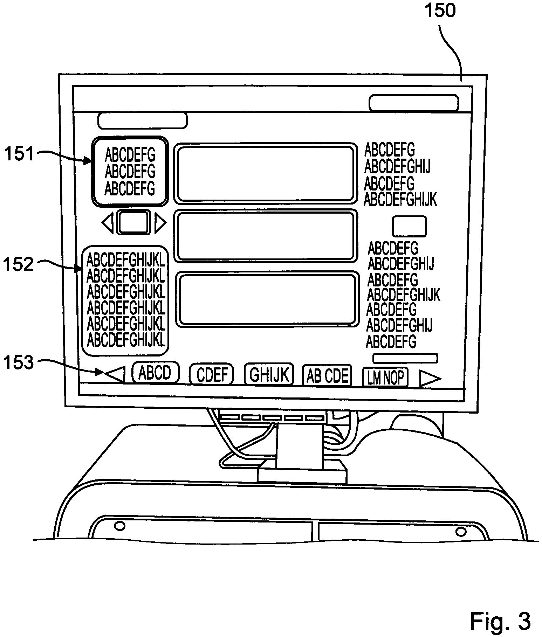

FIG. 3 illustrates an example embodiment of the observer display device (ODD) 150 of FIG. 2. In accordance with an embodiment of the present invention, the ODD 150 is a liquid crystal display (LCD) device. Other display devices are possible as well. For example, the ODD 150 may be a touchscreen display, in accordance with another embodiment of the present invention. The ODD 150 receives video (e.g., SVGA format) and display information from the PPS 110.

As shown in FIG. 3, the ODD 150 is capable of displaying a first user scene showing various welding parameters 151 including position, tip to work, weld angle, travel angle, and travel speed. These parameters may be selected and displayed in real time in graphical form and are used to teach proper welding technique. Furthermore, as shown in FIG. 3, the ODD 150 is capable of displaying simulated welding discontinuity states 152 including, for example, improper weld size, poor bead placement, concave bead, excessive convexity, undercut, porosity, incomplete fusion, slag inclusion, excess spatter, overfill, and burnthrough (melt through). Undercut is a groove melted into the base metal adjacent to the weld or weld root and left unfilled by weld metal. Undercut is often due to an incorrect angle of welding. Porosity refers to cavity type discontinuities formed by gas entrapment during solidification often caused by moving the arc too far away from the coupon. Data associated with the parameters and states may be stored on the VRAW system for student welders.

Also, as shown in FIG. 3, the ODD 150 is capable of displaying user selections 153 including menu, actions, visual cues, new coupon, and end pass. These user selections are tied to user buttons on the console 135. As a user makes various selections via, for example, a touchscreen of the ODD 150 or via the physical WUI 130, the displayed characteristics can change to provide selected information and other options to the user. Furthermore, the ODD 150 may display a view seen by a welder wearing the FMDD 140 at the same angular view of the welder or at various different angles, for example, chosen by an instructor. The ODD 150 may be viewed by an instructor and/or students for various training purposes. For example, the view may be rotated around the finished weld allowing visual inspection by an instructor. In accordance with an alternate embodiment of the present invention, video from the system 100 may be sent to a remote location via, for example, the Internet for remote viewing and/or critiquing. Furthermore, audio may be provided, allowing real-time audio communication between a student and a remote instructor.

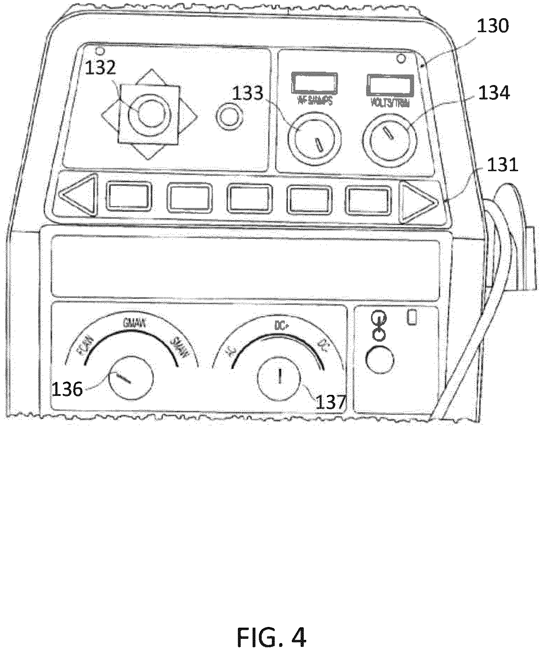

FIG. 4 illustrates an example embodiment of a front portion of the simulated welding console 135 of FIG. 2 showing a physical welding user interface (WUI) 130. The WUI 130 includes a set of buttons 131 corresponding to the user selections 153 displayed on the ODD 150. The buttons 131 may be colored to correspond to the colors of the user selections 153 displayed on the ODD 150. When one of the buttons 131 is pressed, a signal is sent to the PPS 110 to activate the corresponding function. The WUI 130 also includes a joystick 132 capable of being used by a user to select various parameters and selections displayed on the ODD 150. The WUI 130 further includes a dial or knob 133 for adjusting wire feed speed/amps, and another dial or knob 134 for adjusting volts/trim. The WUI 130 also includes a dial or knob 136 for selecting an arc welding process. In accordance with an embodiment of the present invention, three arc welding processes are selectable including flux cored arc welding (FCAW) including gas-shielded and self-shielded processes; gas metal arc welding (GMAW) including short arc, axial spray, STT, and pulse; and shielded metal arc welding (SMAW) including E6010 and E7010 electrodes. In some embodiments, other arc welding processes, such as gas tungsten arc welding (GTAW), could be supported. The WUI 130 further includes a dial or knob 137 for selecting a welding polarity. In accordance with an embodiment of the present invention, three arc welding polarities are selectable including alternating current (AC), positive direct current (DC+), and negative direct current (DC-).

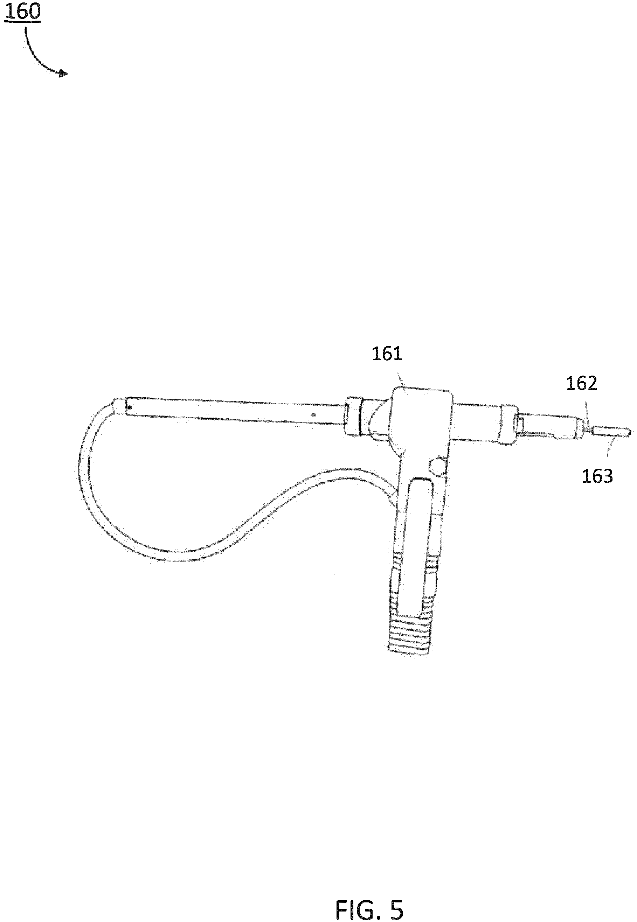

FIG. 5 illustrates an example embodiment of a mock welding tool (MWT) 160 of the system 100 of FIG. 1. The MWT 160 of FIG. 5 simulates a stick welding tool for plate and pipe welding and includes a holder 161 and a simulated stick electrode 162. A trigger on the MWT 160 is used to communicate a signal to the PPS 110 to activate a selected simulated welding process. The simulated stick electrode 162 includes a tactilely resistive tip 163 to simulate resistive feedback that occurs during, for example, a root pass welding procedure in real-world pipe welding or when welding a plate. If the user moves the simulated stick electrode 162 too far back out of the root, the user will be able to feel or sense the lower resistance, thereby deriving feedback for use in adjusting or maintaining the current welding process.

It is contemplated that the stick welding tool may incorporate an actuator, not shown, that withdraws the simulated stick electrode 162 during the virtual welding process. That is to say that as a user engages in virtual welding activity, the distance between holder 161 and the tip of the simulated stick electrode 162 is reduced to simulate consumption of the electrode. The consumption rate, i.e. withdrawal of the simulated stick electrode 162, may be controlled by the PPS 110 and more specifically by coded instructions executed by the PPS 110. The simulated consumption rate may also depend on the user's technique. It is noteworthy to mention here that as the system 100 facilitates virtual welding with different types of electrodes, the consumption rate or reduction of the simulated stick electrode 162 may change with the welding procedure used and/or setup of the system 100.

Other mock welding tools are possible as well, in accordance with other embodiments of the present invention, including a MWT that simulates a hand-held semiautomatic welding gun having a wire electrode fed through the gun, for example. Furthermore, in accordance with other certain embodiments of the present invention, a real welding tool could be used as the MWT 160 to better simulate the actual feel of the tool in the user's hands, even though, in the system 100, the tool would not be used to actually create a real arc. Also, a mock grinding tool may be provided or otherwise simulated, for use in a simulated grinding mode of the system 100. Similarly, a mock cutting tool may be provided or otherwise simulated, for use in a simulated cutting mode of the system 100. Furthermore, a mock gas tungsten arc welding (GTAW) torch or filler material may be provided or otherwise simulated for use in the system 100.

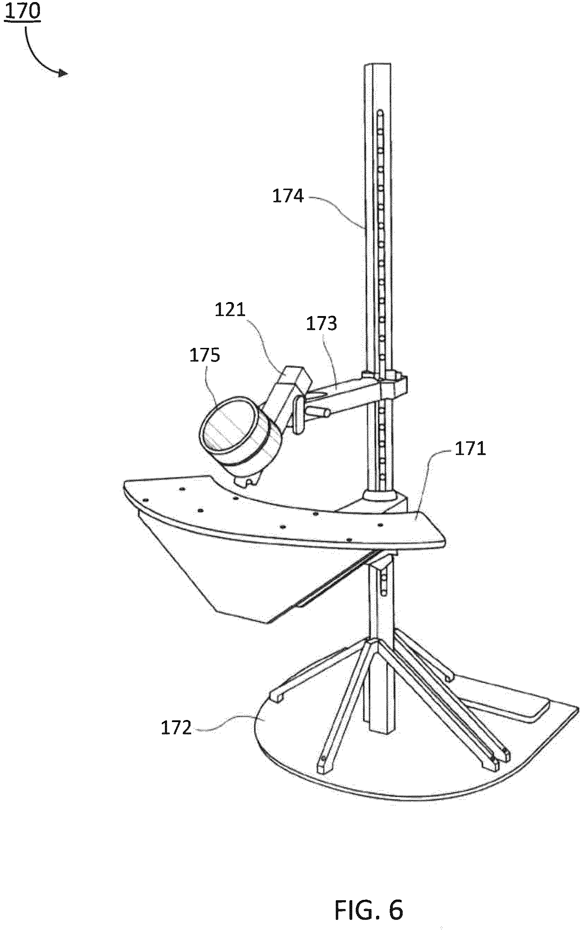

FIG. 6 illustrates an example embodiment of a table/stand (T/S) 170 of the system 100 of FIG. 1. The T/S 170 includes an adjustable table 171, a stand or base 172, an adjustable arm 173, and a vertical post 174. The table 171, the stand 172, and the arm 173 are each attached to the vertical post 174. The table 171 and the arm 173 are each capable of being manually adjusted upward, downward, and rotationally with respect to the vertical post 174. The arm 173 is used to hold various welding coupons (e.g., pipe welding coupon 175) and a user may rest his/her arm on the table 171 when training. The vertical post 174 is indexed with position information such that a user may know exactly where the arm 173 and the table 171 are vertically positioned on the post 174. This vertical position information may be entered into the system by a user using the WUI 130 and the ODD 150.

In accordance with an alternative embodiment of the present invention, the positions of the table 171 and the arm 173 may be automatically set by the PPS 110 via preprogrammed settings, or via the WUI 130 and/or the ODD 150 as commanded by a user. In such an alternative embodiment, the T/S 170 includes, for example, motors and/or servo-mechanisms, and signal commands from the PPS 110 activate the motors and/or servo-mechanisms. In accordance with a further alternative embodiment of the present invention, the positions of the table 171 and the arm 173 and the type of coupon are detected by the system 100. In this way, a user does not have to manually input the position information via the user interface. In such an alternative embodiment, the T/S 170 includes position and orientation detectors and sends signal commands to the PPS 110 to provide position and orientation information, and the pipe welding coupon 175 includes position detecting sensors (e.g., coiled sensors for detecting magnetic fields). A user is able to see a rendering of the T/S 170 adjust on the ODD 150 as the adjustment parameters are changed, in accordance with an embodiment of the present invention.

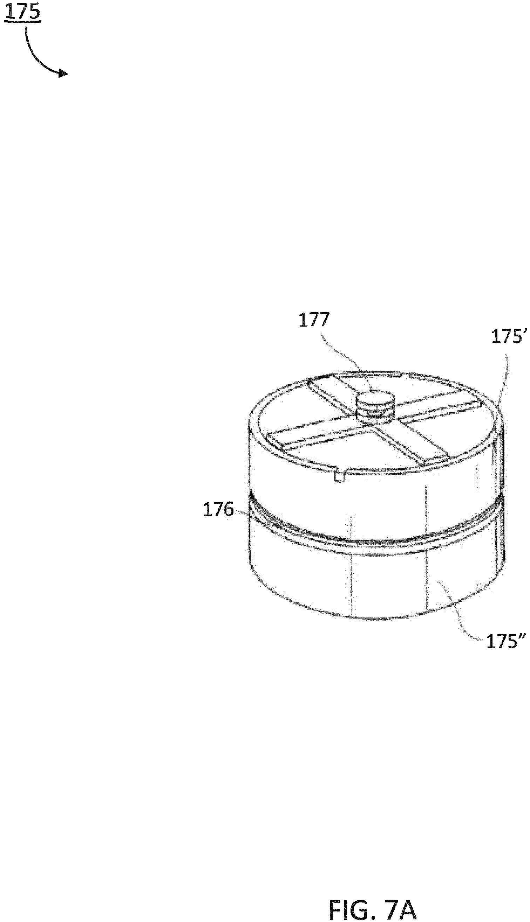

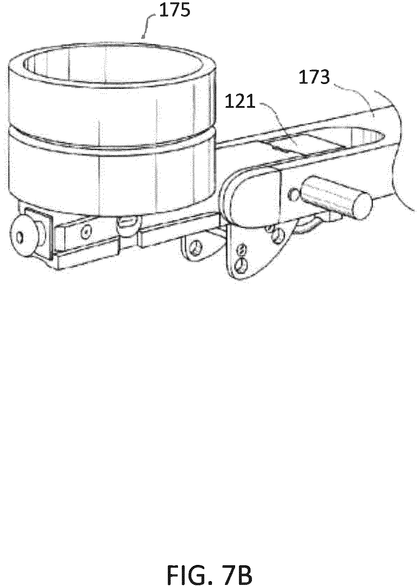

FIG. 7A illustrates a pipe welding coupon (WC) 175 as an example embodiment of the welding coupon (WC) 180 of the system 100 of FIG. 1. The pipe WC 175 simulates two six inch diameter pipes 175' and 175" placed together to form a root 176 to be welded. The pipe WC 175 includes a connection portion 177 at one end of the pipe WC 175, allowing the pipe WC 175 to be attached in a precise and repeatable manner to the arm 173. FIG. 7B illustrates the pipe WC 175 of FIG. 7A mounted on the arm 173 of the table/stand (TS) 170 of FIG. 6. The precise and repeatable manner in which the pipe WC 175 is capable of being attached to the arm 173 allows for spatial calibration of the pipe WC 175 to be performed only once at the factory. Then, in the field, as long as the system 100 is told the position of the arm 173, the system 100 is able to track the MWT 160 and the FMDD 140 with respect to the pipe WC 175 in a simluated environment. A first portion of the arm 173, to which the WC 175 is attached, is capable of being tilted with respect to a second portion of the arm 173, as shown in FIG. 6. This allows the user to practice pipe welding with the pipe in any of several different orientations and angles.

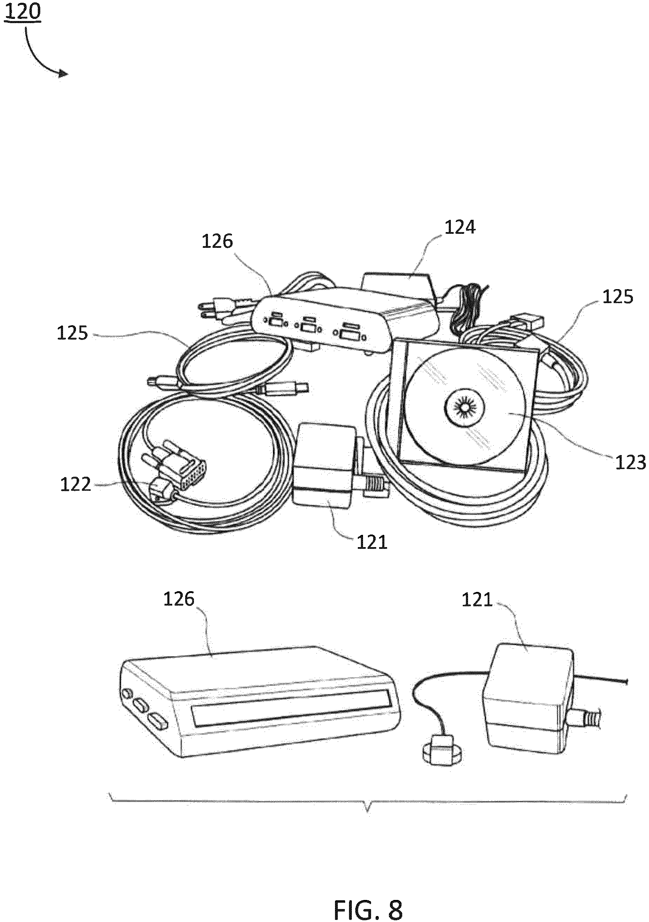

FIG. 8 illustrates various elements of an example embodiment of the spatial tracker (ST) 120 of FIG. 1. The ST 120 is a magnetic tracker that is capable of operatively interfacing with the PPS 110 of the system 100. The ST 120 includes a magnetic source 121 and source cable, at least one sensor 122 and associated cable, host software on disk 123, a power source 124 and associated cable, USB and RS-232 cables 125, and a processor tracking unit 126. The magnetic source 121 is capable of being operatively connected to the processor tracking unit 126 via a cable. The sensor 122 is capable of being operatively connected to the processor tracking unit 126 via a cable. The power source 124 is capable of being operatively connected to the processor tracking unit 126 via a cable. The processor tracking unit 126 is cable of being operatively connected to the PPS 110 via a cable (e.g., the USB or RS-232 cable 125). The host software on disk 123 is capable of being loaded onto the PPS 110 and allows functional communication between the ST 120 and the PPS 110.

Referring to FIG. 6, the magnetic source 121 of the ST 120 is mounted on the first portion of the arm 173. The magnetic source 121 creates a magnetic field around the source 121, including the space encompassing the pipe WC 175 attached to the arm 173, which establishes a 3D spatial frame of reference. The T/S 170 is largely non-metallic (non-ferric and non-conductive) so as not to distort the magnetic field created by the magnetic source 121. The sensor 122 includes three induction coils orthogonally aligned along three spatial directions. The induction coils of the sensor 122 each measure the strength of the magnetic field in each of the three directions and provide that information to the processor tracking unit 126. As a result, the system 100 is able to determine where any portion of the pipe WC 175 is with respect to the 3D spatial frame of reference established by the magnetic field when the pipe WC 175 is mounted on the arm 173. The sensor 122 may be attached to the MWT 160 or to the FMDD 140, allowing the MWT 160 or the FMDD 140 to be tracked by the ST 120 with respect to the 3D spatial frame of reference in both space and orientation. When two sensors 122 are provided and operatively connected to the processor tracking unit 126, both the MWT 160 and the FMDD 140 may be tracked. In this manner, the system 100 is capable of creating a virtual WC, a virtual MWT, and a virtual T/S in virtual reality space and displaying the virtual WC, the virtual MWT, and the virtual T/S on the FMDD 140 and/or the ODD 150 as the MWT 160 and the FMDD 140 are tracked with respect to the 3D spatial frame of reference.

In accordance with an alternative embodiment of the present invention, the sensor(s) 122 may wirelessly interface to the processor tracking unit 126, and the processor tracking unit 126 may wirelessly interface to the PPS 110. In accordance with other alternative embodiments of the present invention, other types of spatial trackers 120 may be used in the system 100 including, for example, an accelerometer/gyroscope-based tracker, an optical tracker (active or passive), an infrared tracker, an acoustic tracker, a laser tracker, a radio frequency tracker, an inertial tracker, and augmented reality based tracking systems. Other types of trackers may be possible as well, including combinations of any of the aforementioned trackers.

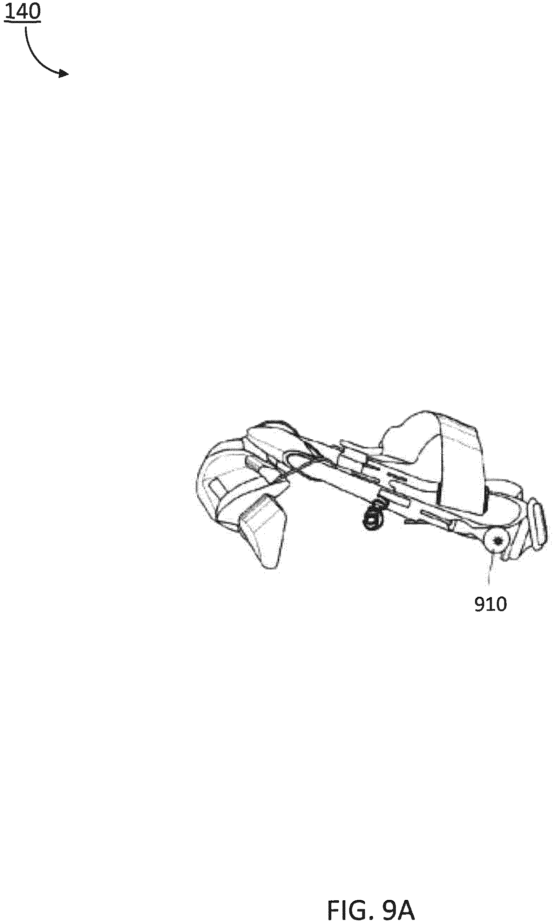

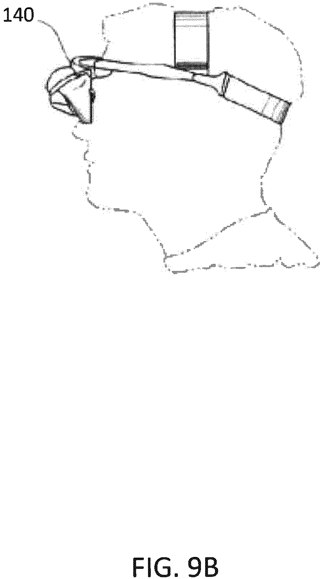

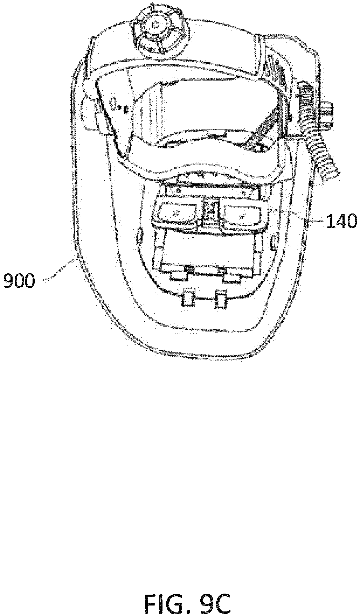

FIG. 9A illustrates an example embodiment of the face-mounted display device 140 (FMDD) of the system 100 of FIG. 1. FIG. 9B is an illustration of how the FMDD 140 of FIG. 9A is secured on the head of a user. FIG. 9C illustrates an example embodiment of the FMDD 140 of FIG. 9A integrated into a welding helmet 900. The FMDD 140 operatively connects to the PPS 110 and the ST 120 either via wired means or wirelessly. A sensor 122 of the ST 120 may be attached to the FMDD 140 or to the welding helmet 900, in accordance with various embodiments of the present invention, allowing the FMDD 140 and/or welding helmet 900 to be tracked with respect to the 3D spatial frame of reference created by the ST 120.

In accordance with an embodiment of the present invention, the FMDD 140 includes two high-contrast SVGA 3D OLED microdisplays capable of delivering fluid full-motion video in the 2D and frame sequential video modes. Video of the virtual reality environment is provided and displayed on the FMDD 140. A zoom (e.g., 2x) mode may be provided, allowing a user to simulate a cheater lens, for example.

The FMDD 140 further includes two earbud speakers 910, allowing the user to hear simulated welding-related and environmental sounds produced by the system 100. The FMDD 140 may operatively interface to the PPS 110 via wired or wireless means, in accordance with various embodiments of the present invention. In accordance with an embodiment of the present invention, the PPS 110 provides stereoscopic video to the FMDD 140, providing enhanced depth perception to the user. In accordance with an alternate embodiment of the present invention, a user is able to use a control on the MWT 160 (e.g., a button or switch) to call up and select menus and display options on the FMDD 140. This may allow the user to easily reset a weld if he makes a mistake, change certain parameters, or back up a little to re-do a portion of a weld bead trajectory, for example.

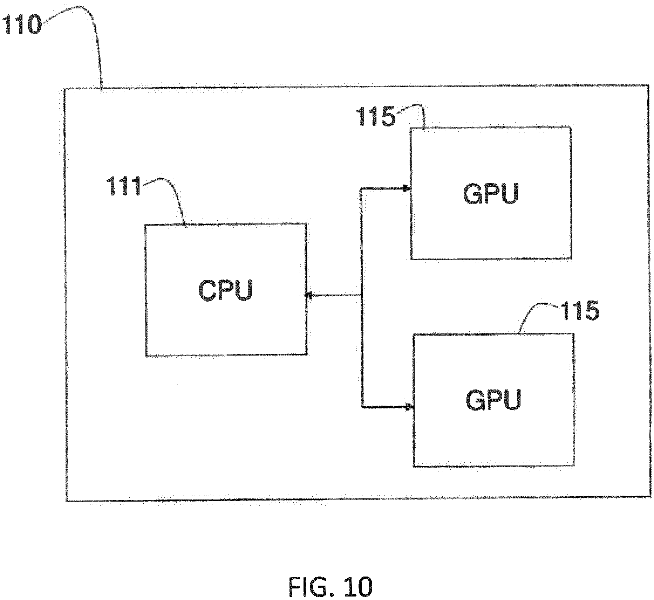

FIG. 10 illustrates an example embodiment of a subsystem block diagram of the programmable processor-based subsystem (PPS) 110 of the system 100 of FIG. 1. The PPS 110 includes a central processing unit (CPU) 111 and two graphics processing units (GPU) 115, in accordance with an embodiment of the present invention. The two GPUs 115 are programmed to provide virtual reality simulation of a weld puddle (also known as a weld pool) having real-time molten metal fluidity and heat absorption and dissipation characteristics, in accordance with an embodiment of the present invention.

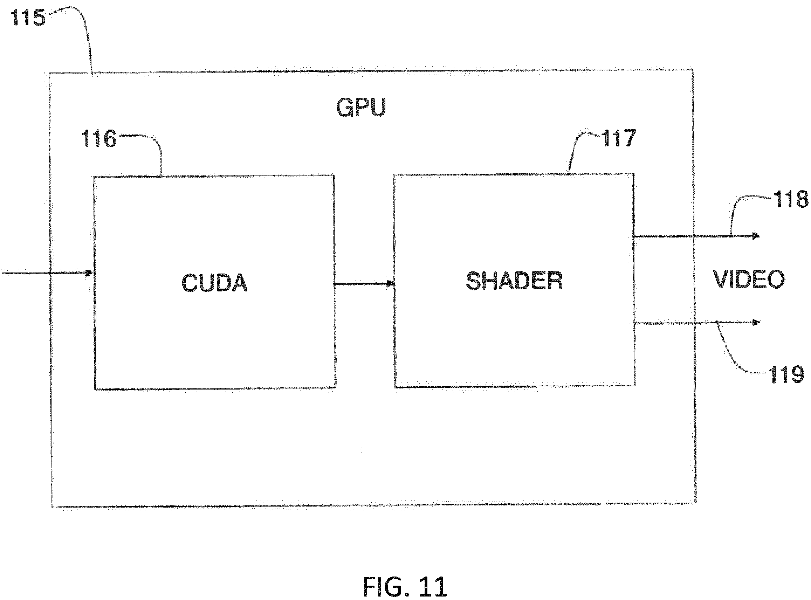

FIG. 11 illustrates an example embodiment of a block diagram of a graphics processing unit (GPU) 115 of the PPS 110 of FIG. 10. Each GPU 115 supports the implementation of data parallel algorithms. In accordance with an embodiment of the present invention, each GPU 115 provides two video outputs 118 and 119 capable of providing two virtual reality views. The two GPUs 115 in the PPS 110 of this example embodiment provide a total of four video outputs. Two of the video outputs may be routed to the FMDD 140, rendering the welder's point of view, and a third video output may be routed to the ODD 150, for example, rendering either the welder's point of view or some other point of view. The remaining fourth video output may be routed to a projector, for example. Both GPUs 115 perform the same welding physics computations but may render the virtual reality environment from the same or different points of view. The GPU 115 includes a compute unified device architecture (CUDA) 116 and a shader 117. The CUDA 116 is the computing engine of the GPU 115 which is accessible to software developers through industry standard programming languages. The CUDA 116 includes parallel cores and is used to run the physics model of the weld puddle simulation described herein. The CPU 111 provides real-time welding input data to the CUDA 116 on the GPU 115. The shader 117 is responsible for drawing and applying all of the visuals of the simulation. Bead and puddle visuals are driven by the state of a wexel displacement map which is described later herein. In accordance with an embodiment of the present invention, the physics model runs and updates at a rate of about 30 times per second.

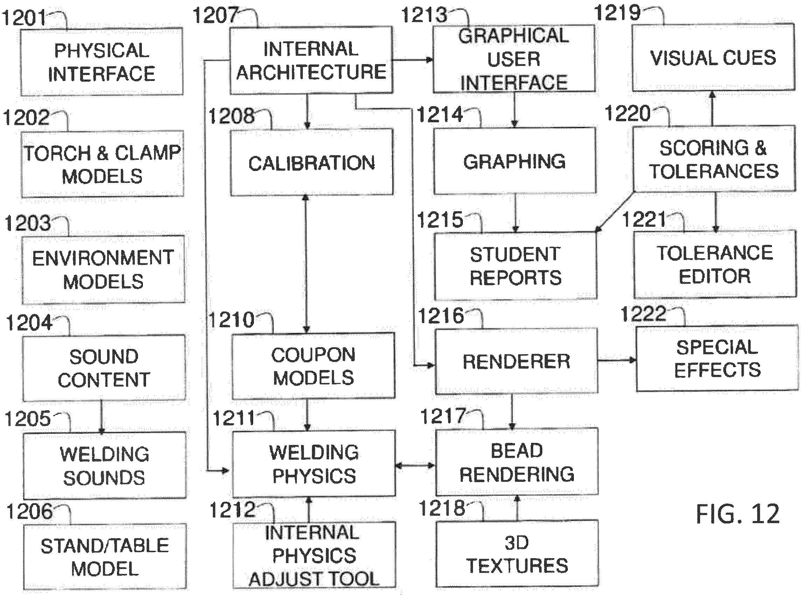

FIG. 12 illustrates an example embodiment of a functional block diagram of the system 100 of FIG. 1. The various functional blocks of the system 100 as shown in FIG. 12 are implemented largely via software instructions and modules running on the PPS 110. The various functional blocks of the system 100 include a physical interface 1201, torch and clamp models 1202, environment models 1203, sound content functionality 1204, welding sounds 1205, stand/table model 1206, internal architecture functionality 1207, calibration functionality 1208, coupon models 1210, welding physics 1211, internal physics adjustment tool (tweaker) 1212, graphical user interface functionality 1213, graphing functionality 1214, student reports functionality 1215, renderer 1216, bead rendering 1217, 3D textures 1218, visual cues functionality 1219, scoring and tolerance functionality 1220, tolerance editor 1221, and special effects 1222.

The internal architecture functionality 1207 provides the higher level software logistics of the processes of the system 100 including, for example, loading files, holding information, managing threads, turning the physics model on, and triggering menus. The internal architecture functionality 1207 runs on the CPU 111, in accordance with an embodiment of the present invention. Certain real-time inputs to the PPS 110 include arc location, gun position, FMDD or helmet position, gun on/off state, and contact made state (yes/no).

The graphical user interface functionality 1213 allows a user, through the ODD 150 using the joystick 132 of the physical user interface 130, to set up a welding scenario. In accordance with an embodiment of the present invention, the setup of a welding scenario includes selecting a language, entering a user name, selecting a practice plate (i.e., a welding coupon), selecting a welding process (e.g., FCAW, GMAW, SMAW) and associated axial spray, pulse, or short arc methods, selecting a gas type and flow rate, selecting a type of stick electrode (e.g., 6010 or 7018), and selecting a type of flux cored wire (e.g., self-shielded, gas-shielded). The setup of a welding scenario also includes selecting a table height, an arm height, an arm position, and an arm rotation of the T/S 170. The setup of a welding scenario further includes selecting an environment (e.g., a background environment in virtual reality space), setting a wire feed speed, setting a voltage level, setting an amperage, selecting a polarity, and turning particular visual cues on or off.

During a simulated welding scenario, the graphing functionality 1214 gathers user performance parameters and provides the user performance parameters to the graphical user interface functionality 1213 for display in a graphical format (e.g., on the ODD 150). Tracking information from the ST 120 feeds into the graphing functionality 1214. The graphing functionality 1214 includes a simple analysis module (SAM) and a whip/weave analysis module (WWAM). The SAM analyzes user welding parameters including welding travel angle, travel speed, weld angle, position, and tip to work distance by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. For each parameter analyzed by the SAM and the WWAM, a tolerance window is defined by parameter limits around an optimum or ideal set point input into bead tables using the tolerance editor 1221, and scoring and tolerance functionality 1220 is performed. Various types of student training data such as, for example, parameter data and scoring data may be stored on the VRAW system.

The tolerance editor 1221 includes a weldometer which approximates material usage, electrical usage, and welding time. Furthermore, when certain parameters are out of tolerance, welding discontinuities (i.e., welding defects) may occur. The state of any welding discontinuities are processed by the graphing functionality 1214 and presented via the graphical user interface functionality 1213 in a graphical format. Such welding discontinuities include improper weld size, poor bead placement, concave bead, excessive convexity, undercut, porosity, incomplete fusion, slag entrapment, overfill, burnthrough, and excessive spatter. In accordance with an embodiment of the present invention, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality 1220 provides number scores depending on how close to optimum (ideal) a user is for a particular parameter and depending on the level of discontinuities or defects present in the weld. The optimum values are typically derived from real-world data. Information from the scoring and tolerance functionality 1220 and from the graphics functionality 1214 may be used by the student reports functionality 1215 to create a performance report for an instructor and/or a student.

The system 100 is capable of analyzing and displaying the results of virtual welding activity. By analyzing the results, it is meant that system 100 is capable of determining when during the welding pass and where along the weld joints, the user deviated from the acceptable limits of the welding process. A score may be attributed to the user's performance. In one embodiment, the score may be a function of deviation in position, orientation and speed of the mock welding tool 160 through ranges of tolerances, which may extend from an ideal welding pass to marginal or unacceptable welding activity. Any gradient of ranges may be incorporated into the system 100 as chosen for scoring the user's performance. Scoring may be displayed numerically or alpha-numerically. Additionally, the user's performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. The tolerance ranges of the parameters are taken from real-world welding data, thereby providing accurate feedback as to how the user will perform in the real world. In another embodiment, analysis of the defects corresponding to the user's performance may also be incorporated and displayed on the ODD 150. In this embodiment, a graph may be depicted indicating what type of discontinuity resulted from measuring the various parameters monitored during the virtual welding activity. While occlusions may not be visible on the ODD 150, defects may still have occurred as a result of the user's performance, the results of which may still be correspondingly displayed (e.g., graphed). Again, various types of student training data such as, for example, parameter data and scoring data may be stored on the VRAW system.

Visual cues functionality 1219 provides immediate feedback to the user by displaying overlaid colors and indicators on the FMDD 140 and/or the ODD 150. Visual cues are provided for each of the welding parameters 151 including position, tip to work distance, weld angle, travel angle, travel speed, and arc length (e.g., for stick welding) and visually indicate to the user if some aspect of the user's welding technique should be adjusted based on the predefined limits or tolerances. Visual cues may also be provided for whip/weave technique and weld bead "dime" spacing, for example. Visual cues may be set independently or in any desired combination.

Calibration functionality 1208 provides the capability to match up physical components in real-world space (3D frame of reference) with visual components in the simulated environment (e.g., in virtual reality space). Each different type of welding coupon (WC) 180 is calibrated in the factory by mounting the WC 180 to the arm 173 of the T/S 170 and touching the WC 180 at predefined points (indicated by, for example, three dimples on the WC 180) with a calibration stylus operatively connected to the ST 120. The ST 120 reads the magnetic field intensities at the predefined points, provides position information to the PPS 110, and the PPS 110 uses the position information to perform the calibration (i.e., the translation from real-world space to virtual reality space).

Any particular type of WC 180 fits into the arm 173 of the T/S 170 in the same repeatable way to within very tight tolerances. Therefore, once a particular WC type is calibrated, that WC type does not have to be re-calibrated (i.e., calibration of a particular type of WC is a one-time event). WCs 180 of the same type are interchangeable. Calibration ensures that physical feedback perceived by the user during a welding process matches up with what is displayed to the user in virtual reality space, making the simulation seem more real. For example, if the user slides the tip of a MWT 160 around the corner of an actual WC 180, the user will see the tip sliding around the corner of the virtual WC on the FMDD 140 as the user feels the tip sliding around the actual corner. In accordance with an embodiment of the present invention, the MWT 160 is placed in a pre-positioned jig and is calibrated as well, based on the known jig position.

In accordance with an alternative embodiment of the present invention, "smart" coupons are provided, having sensors on, for example, the corners of the coupons. The ST 120 is able to track the corners of a "smart" coupon such that the system 100 continuously knows where the "smart" coupon is in real-world 3D space. In accordance with a further alternative embodiment of the present invention, licensing keys are provided to "unlock" welding coupons. When a particular WC 180 is purchased, a licensing key is provided allowing the user to enter the licensing key into the system 100, unlocking the software associated with that WC 180. In accordance with another embodiment of the present invention, special non-standard welding coupons may be provided based on real-world CAD drawings of parts. Users may be able to train on welding a CAD part even before the part is actually produced in the real world.

Sound content functionality 1204 and welding sounds 1205 provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the MWT 160 positioned correctly, and a hissing sound is provided when the MWT 160 is positioned correctly. In a short arc welding process, a steady crackling or frying sound is provided for proper welding technique, and a hissing sound may be provided when undercutting is occurring. These sounds mimic real-world sounds corresponding to correct and incorrect welding technique.

High fidelity sound content may be taken from real-world recordings of actual welding using a variety of electronic and mechanical means, in accordance with various embodiments of the present invention. In accordance with an embodiment of the present invention, the perceived volume and directionality of sound is modified depending on the position, orientation, and distance of the user's head (assuming the user is wearing a FMDD 140 that is tracked by the ST 120) with respect to the simulated arc between the MWT 160 and the WC 180. Sound may be provided to the user via ear bud speakers 910 in the FMDD 140 or via speakers configured in the console 135 or T/S 170, for example.

Environment models 1203 are provided to provide various background scenes (still and moving) in the simulated environment (e.g., virtual reality space). Such background environments may include, for example, an indoor welding shop, an outdoor race track, a garage, etc. and may include moving cars, people, birds, clouds, and various environmental sounds. The background environment may be interactive, in accordance with an embodiment of the present invention. For example, a user may have to survey a background area, before starting welding, to ensure that the environment is appropriate (e.g., safe) for welding. Torch and clamp models 1202 are provided which model various MWTs 160 including, for example, guns, holders with stick electrodes, etc. in virtual reality space.

Coupon models 1210 are provided which model various WCs 180 including, for example, flat plate coupons, T-joint coupons, butt-joint coupons, groove-weld coupons, and pipe coupons (e.g., 2-inch diameter pipe and 6-inch diameter pipe) in virtual reality space. A stand/table model 1206 is provided which models the various parts of the T/S 170 including an adjustable table 171, a stand 172, an adjustable arm 173, and a vertical post 174 in virtual reality space. A physical interface model 1201 is provided which models the various parts of the welding user interface 130, console 135, and ODD 150 in virtual reality space.

In accordance with an embodiment of the present invention, simulation of a weld puddle or pool in virtual reality space is accomplished where the simulated weld puddle has real-time molten metal fluidity and heat dissipation characteristics. At the heart of the weld puddle simulation is the welding physics functionality 1211 (also known as the physics model) which is run on the GPUs 115, in accordance with an embodiment of the present invention. The welding physics functionality employs a double displacement layer technique to accurately model dynamic fluidity/viscosity, solidity, heat gradient (heat absorption and dissipation), puddle wake, and bead shape.

The welding physics functionality 1211 communicates with the bead rendering functionality 1217 to render a weld bead in all states from the heated molten state to the cooled solidified state. The bead rendering functionality 1217 uses information from the welding physics functionality 1211 (e.g., heat, fluidity, displacement, dime spacing) to accurately and realistically render a weld bead in virtual reality space in real-time. The 3D textures functionality 1218 provides texture maps to the bead rendering functionality 1217 to overlay additional textures (e.g., scorching, slag, grain) onto the simulated weld bead. For example, slag may be shown rendered over a weld bead during and just after a welding process, and then removed to reveal the underlying weld bead. The renderer functionality 1216 is used to render various non-puddle specific characteristics using information from the special effects module 1222 including sparks, spatter, smoke, arc glow, fumes and gases, and certain discontinuities such as, for example, undercut and porosity.

The internal physics adjustment tool 1212 is a tweaking tool that allows various welding physics parameters to be defined, updated, and modified for the various welding processes. In accordance with an embodiment of the present invention, the internal physics adjustment tool 1212 runs on the CPU 111 and the adjusted or updated parameters are downloaded to the GPUs 115. The types of parameters that may be adjusted via the internal physics adjustment tool 1212 include parameters related to welding coupons, process parameters that allow a process to be changed without having to reset a welding coupon (allows for doing a second pass), various global parameters that can be changed without resetting the entire simulation, and other various parameters.

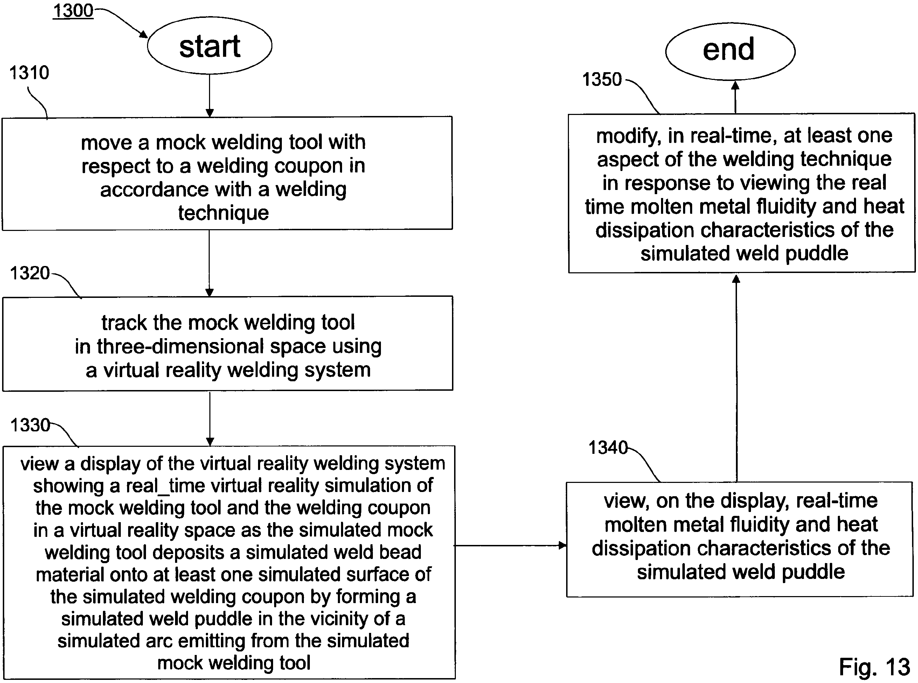

FIG. 13 is a flow chart of an embodiment of a method 1300 of training using the virtual reality training system 100 of FIG. 1. In step 1310, a user moves a mock welding tool with respect to a welding coupon in accordance with a welding technique. In step 1320, a welding simulator (e.g., the system 100) tracks position and orientation of the mock welding tool in three-dimensional space. In step 1330, the user views a display of the welding simulator showing a real-time simulation of the mock welding tool and the welding coupon in a simulated environment (e.g., virtual reality space) as the simulated mock welding tool deposits a simulated weld bead material onto at least one simulated surface of the simulated welding coupon by forming a simulated weld puddle in the vicinity of a simulated arc emitting from said simulated mock welding tool. In step 1340, the user views on the display, real-time molten metal fluidity and heat dissipation characteristics of the simulated weld puddle. In step 1350, the user modifies in real-time, at least one aspect of the welding technique in response to viewing the real-time molten metal fluidity and heat dissipation characteristics of the simulated weld puddle.

The method 1300 illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how most welding operations are actually performed in the real world. The double displacement layer modeling of the welding physics functionality 1211, running on the GPUs 115, allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged with the new weld bead material being deposited as a new weld puddle is formed in virtual reality space from the combination of any of the previous weld bead material, the new weld bead material, and possibly the underlying coupon material, in accordance with certain embodiments of the present invention. Such subsequent passes may be needed to make a large fillet or groove weld, performed to repair a weld bead formed by a previous pass, for example, or may include a hot pass and one or more fill and cap passes after a root pass as is done in pipe welding. In accordance with various embodiments of the present invention, weld bead and base material may include mild steel, stainless steel, aluminum, nickel based alloys, or other materials. Again, various types of student training data such as, for example, parameter data and scoring data may be stored on the VRAW system and may be used later with respect to a learning management system (LMS) as described later herein. Other types of student training data may be stored as well such as, for example, student identifying data.

### Engine for Modeling

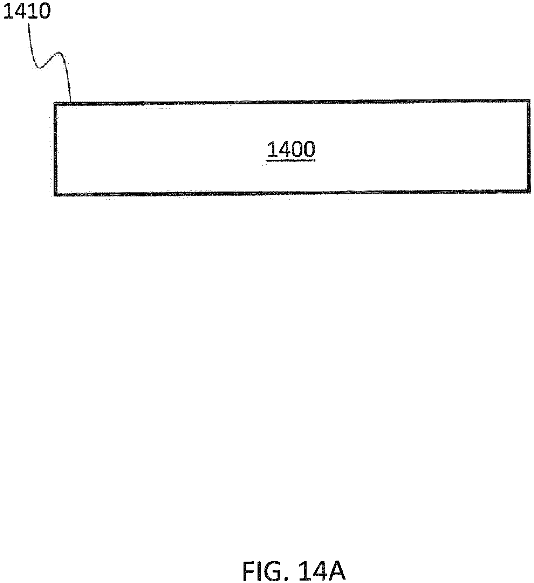

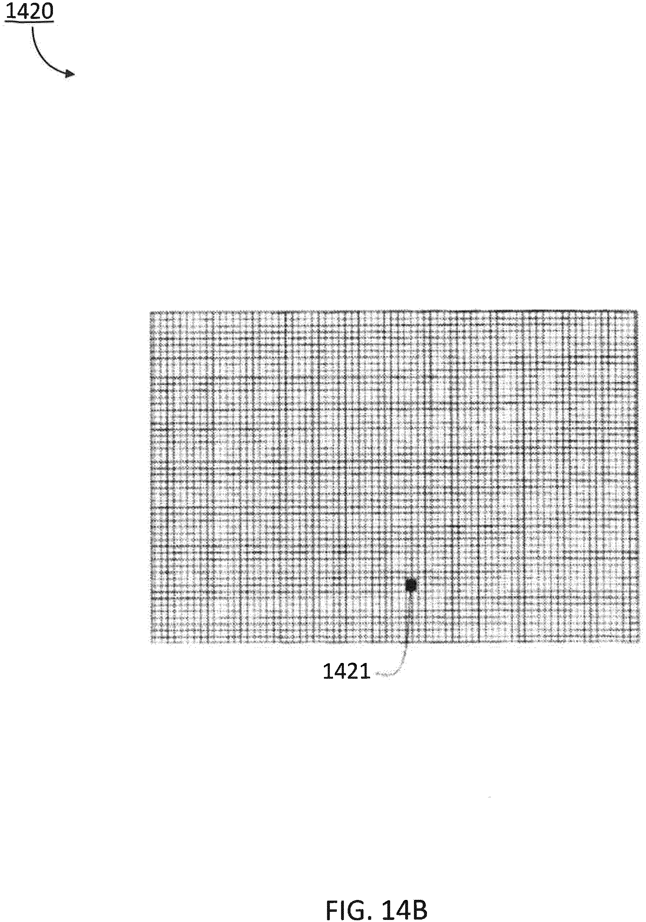

FIGS. 14A-14B illustrate the concept of a welding element (wexel) displacement map 1420, in accordance with an embodiment of the present invention. FIG. 14A shows a side view of a flat welding coupon 1400 having a flat top surface 1410. The welding coupon 1400 exists in the real world as, for example, a plastic part, and also exists in virtual reality space as a simulated welding coupon (e.g., simulating a metal workpiece). FIG. 14B shows a representation of the top surface 1410 of the simulated welding coupon 1400 broken up into a grid or array of welding elements, termed "wexels" forming a wexel map 1420. Each wexel (e.g., wexel 1421) defines a small portion of the surface 1410 of the welding coupon. The wexel map defines the surface resolution. Changeable channel parameter values are assigned to each wexel, allowing values of each wexel to dynamically change in real-time in the simulated environment (e.g., virtual reality weld space) during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

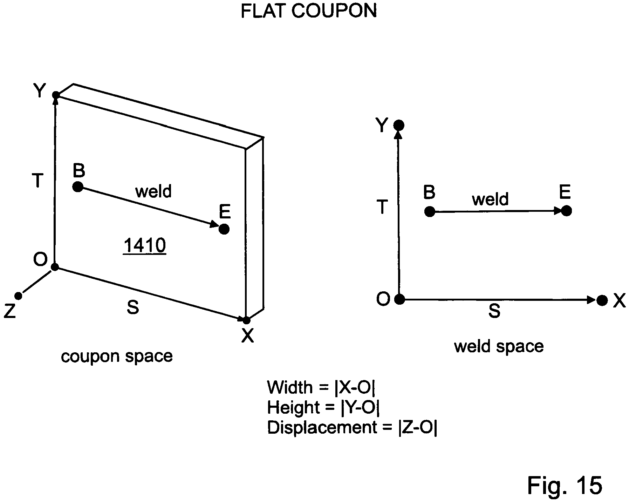

FIG. 15 illustrates an example embodiment of a coupon space and a weld space of the flat welding coupon 1400 of FIG. 14A simulated in the welding training system 100 of FIG. 1. Points 0, X, Y, and Z define the local 3D coupon space. In general, each coupon type defines the mapping from 3D coupon space to 2D virtual reality weld space. The wexel map 1420 of FIG. 14B is a two-dimensional array of values that map to weld space in virtual reality. A user is to weld from point B to point E as shown in FIG. 15. A trajectory line from point B to point E is shown in both 3D coupon space and 2D weld space in FIG. 15.

Each type of coupon defines the direction of displacement for each location in the wexel map. For the flat welding coupon of FIG. 15, the direction of displacement is the same at all locations in the wexel map (i.e., in the Z-direction). The texture coordinates of the wexel map are shown as S, T (sometimes called U, V) in both 3D coupon space and 2D weld space, in order to clarify the mapping. The wexel map is mapped to and represents the rectangular surface 1410 of the welding coupon 1400.

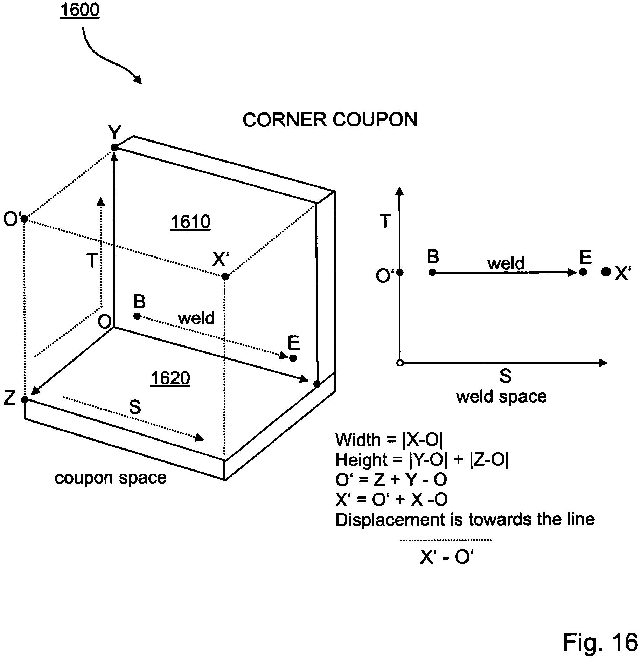

FIG. 16 illustrates an example embodiment of a coupon space and a weld space of a corner welding coupon 1600 simulated in the system 100. The corner welding coupon 1600 has two surfaces 1610 and 1620 in 3D coupon space that are mapped to 2D weld space as shown in FIG. 16. Again, points 0, X, Y, and Z define the local 3D coupon space. The texture coordinates of the wexel map are shown as S, T in both 3D coupon space and 2D weld space, in order to clarify the mapping. A user is to weld from point B to point E as shown in FIG. 16. A trajectory line from point B to point E is shown in both 3D coupon space and 2D weld space in FIG. 16. However, the direction of displacement is towards the line X'-0' as shown in the 3D coupon space, towards the opposite corner.

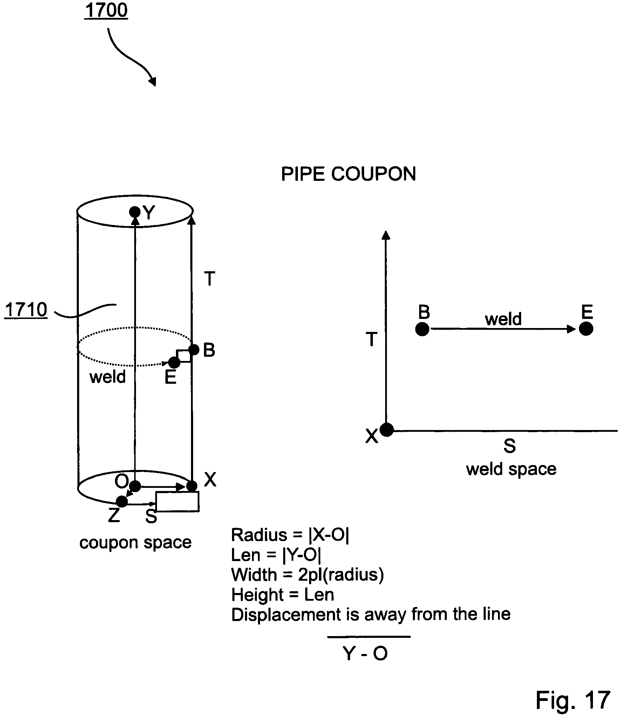

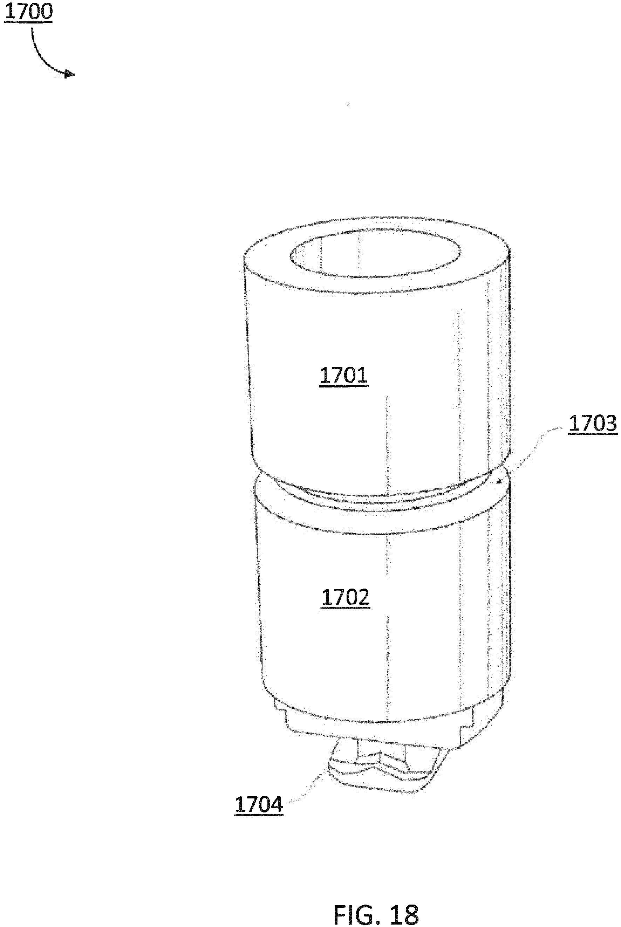

FIG. 17 illustrates an example embodiment of a coupon space and a weld space of a pipe welding coupon 1700 simulated in the system 100. The pipe welding coupon 1700 has a curved surface 1710 in 3D coupon space that is mapped to 2D weld space. Points 0, X, Y, and Z once again define the local 3D coupon space. The texture coordinates of the wexel map are shown as S, T in both 3D coupon space and 2D weld space, in order to clarify the mapping. A user is to weld from point B to point E along a curved trajectory as shown in FIG. 17. A trajectory curve and line from point B to point E is shown in 3D coupon space and 2D weld space, respectively. The direction of displacement is away from the line Y-0 (i.e., away from the center of the pipe). FIG. 18 illustrates an example embodiment of the pipe welding coupon 1700 of FIG. 17. The pipe welding coupon 1700 is made of a non-ferric, non-conductive plastic and simulates two pipe pieces 1701 and 1702 coming together to form a root joint 1703. An attachment piece 1704 for attaching to the arm 173 of the stand 170 is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue). A wexel contains channels of information (e.g., P, H, E, D) that define a weldable surface in virtual reality space.

In accordance with an embodiment of the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

In accordance with an embodiment of the present invention, a displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle displacement is "temporary" and only lasts as long as there are particles and heat present. Displacement is "permanent." Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

In accordance with an embodiment of the present invention, the simulated welding process in virtual reality space works as follows: Particles stream from the emitter (emitter of the simulated mock welding tool 160) in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes are tweaked or adjusted to persist until solidification is complete. Certain particle properties that are modeled in the system 100 include attraction/repulsion, velocity (related to heat), dampening (related to heat dissipation), and direction (related to gravity).

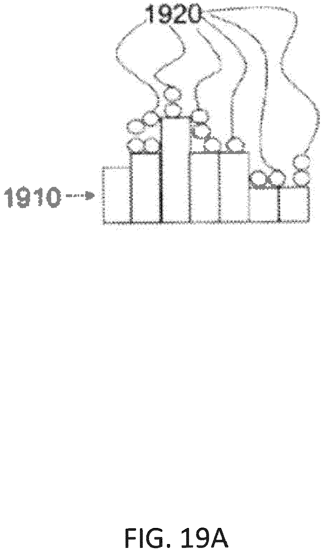

FIGS. 19A-19C illustrate an example embodiment of the concept of a dual-displacement (displacement and particles) puddle model of the system 100. Welding coupons are simulated in a simulated environment (e.g., virtual reality space) having at least one surface. The surfaces of the welding coupon are simulated in virtual reality space as a double displacement layer including a solid displacement layer and a puddle displacement layer. The puddle displacement layer is capable of modifying the solid displacement layer.

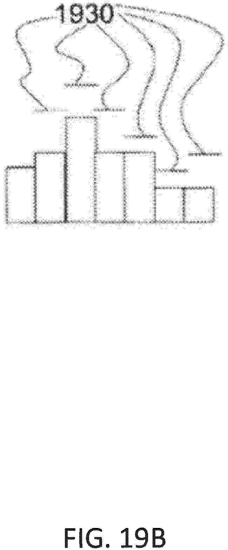

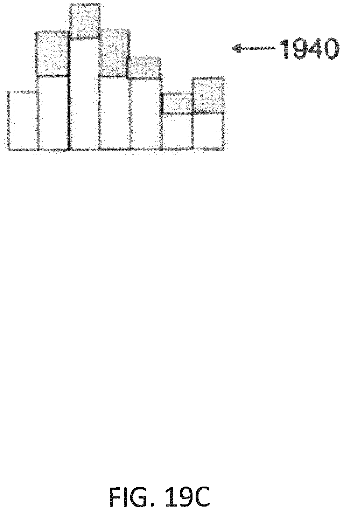

As described herein, "puddle" is defined by an area of the wexel map where the Puddle value has been raised up by the presence of particles. The sampling process is represented in FIGS. 19A-19C. A section of a wexel map is shown having seven adjacent wexels. The current Displacement values are represented by un-shaded rectangular bars 1910 of a given height (i.e., a given displacement for each wexel). In FIG. 19A, the particles 1920 are shown as round un-shaded dots colliding with the current Displacement levels and are piled up. In FIG. 19B, the "highest" particle heights 1930 are sampled at each wexel location. In FIG. 19C, the shaded rectangles 1940 show how much Puddle has been added on top of the Displacement as a result of the particles. The weld puddle height is not instantly set to the sampled values since Puddle is added at a particular liquification rate based on Heat. Although not shown in FIGS. 19A-19C, it is possible to visualize the solidification process as the Puddle (shaded rectangles) gradually shrinks and the Displacement (unshaded rectangles) gradually grows from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the welding training system 100, the number of wexels plus puddle particles tends to remain relatively constant. This is because the number of wexels that are being processed is fixed and the number of puddle particles that exist and are being processed during the welding process tend to remain relatively constant because puddle particles are being created and "destroyed" at a similar rate (i.e., the puddle particles are temporary). Therefore, the processing load of the logic processor-based subsystem 110 remains relatively constant during a simulated welding session.

In accordance with an alternate embodiment of the present invention, puddle particles may be generated within or below the surface of the welding coupon. In such an embodiment, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed and the puddle particles being created and destroyed is still relatively constant.

In accordance with alternate embodiments of the present invention, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative embodiments may not provide a relatively constant processing load for the system 100, however.

Furthermore, in accordance with an embodiment of the present invention, blowthrough or a keyhole is simulated by taking material away. For example, if a user keeps an arc in the same location for too long, in the real world, the material would burn away causing a hole. Such real-world burnthrough is simulated in the system 100 by wexel decimation techniques. If the amount of heat absorbed by a wexel is determined to be too high by the system 100, that wexel may be flagged or designated as being burned away and rendered as such (e.g., rendered as a hole). Subsequently, however, wexel reconstitution may occur for certain welding process (e.g., pipe welding) where material is added back after being initially burned away. In general, the system 100 simulates wexel decimation (taking material away) and wexel reconstitution (adding material back).

Furthermore, removing material in root-pass welding is properly simulated in the system 100. For example, in the real world, grinding of the root pass may be performed prior to subsequent welding passes. Similarly, the system 100 may simulate a grinding pass that removes material from the virtual weld joint. It will be appreciated that the material removed is modeled as a negative displacement on the wexel map. That is to say that the grinding pass removes material that is modeled by the system 100 resulting in an altered bead contour. Simulation of the grinding pass may be automatic, which is to say that the system 100 removes a predetermined thickness of material, which may be respective to the surface of the root pass weld bead. In an alternate embodiment, an actual grinding tool, or grinder, may be simulated that turns on and off by activation of the mock welding tool 160 or another input device. It is noted that the grinding tool may be simulated to resemble a real-world grinder. In this embodiment, the user maneuvers the grinding tool along the root pass to remove material responsive to the movement thereof. It will be understood that the user may be allowed to remove too much material. In a manner similar to that described above, holes or keyholes, or other defects (described above) may result if the user "grinds away" to much material. Still, hard limits or stops may be implemented, i.e. programmed, to prevent the user from removing too much material or indicate when too much material is being removed.

In addition to the non-visible "puddle" particles described herein, the system 100 also uses three other types of visible particles to represent Arc, Flame, and Spark effects, in accordance with an embodiment of the present invention. These types of particles do not interact with other particles of any type but interact only with the displacement map. While these particles do collide with the simulated weld surface, they do not interact with each other. Only Puddle particles interact with each other, in accordance with an embodiment of the present invention. The physics of the Spark particles is setup such that the Spark particles bounce around and are rendered as glowing dots in the simulated environment (e.g., virtual reality space).

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the system 100, in accordance with other embodiments of the present invention. For example, smoke particles may be modeled and simulated in a similar manner to flame particles.

The final steps in the simulated visualization are handled by the vertex and pixel shaders provided by the shaders 117 of the GPUs 115. The vertex and pixel shaders apply Puddle and Displacement, as well as surface colors and reflectivity altered due to heat, etc. The Extra (E) channel of the PHED wexel format, as discussed earlier herein, contains all of the extra information used per wexel. In accordance with an embodiment of the present invention, the extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a 1D image map and a per wexel bead wake value that encodes the time at which a given bit of bead is solidified. Once a hot puddle wexel location is no longer hot enough to be called "puddle," a time is saved at that location and is called "bead wake." The end result is that the shader code is able to use the 1D texture map to draw the "ripples" that give a bead its unique appearance which portrays the direction in which the bead was laid down. In accordance with an alternative embodiment of the present invention, the system 100 is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

### Gaming Concepts in Simulated Welding Training

As used herein, the term "gaming concepts" relates to techniques or constructs that introduce competitive and/or entertainment aspects to an exercise. In this manner, the gaming concepts can reduce the tediousness of repetitive training exercises, add a competitive objective to a training exercise, link access to more advanced training exercises to successful completion of precursor exercises, etc.

As noted above, a score may be attributed to a user's performance during a welding exercise (simulated or otherwise). The score, which quantifies the performance of a particular user relative to a particular training exercise, can be used to implement many of the gaming concepts described herein. Variations of this scoring technique, such as a simple pass or fail determination, may also be suitable for certain applications.

In some exemplary embodiments, the welding training systems/methods set a particular objective (e.g., achieve a score of at least x) for a welding exercise that must be achieved to advance to a next exercise. In some exemplary embodiments, if the user struggles to achieve the particular objective because of an identified deficiency, the systems/methods refer the user to auxiliary training intended to improve the deficiency.

In some exemplary embodiments, the welding training systems/methods utilize a user's own prior performance, or the performance of another user, as a baseline to encourage improved performance.

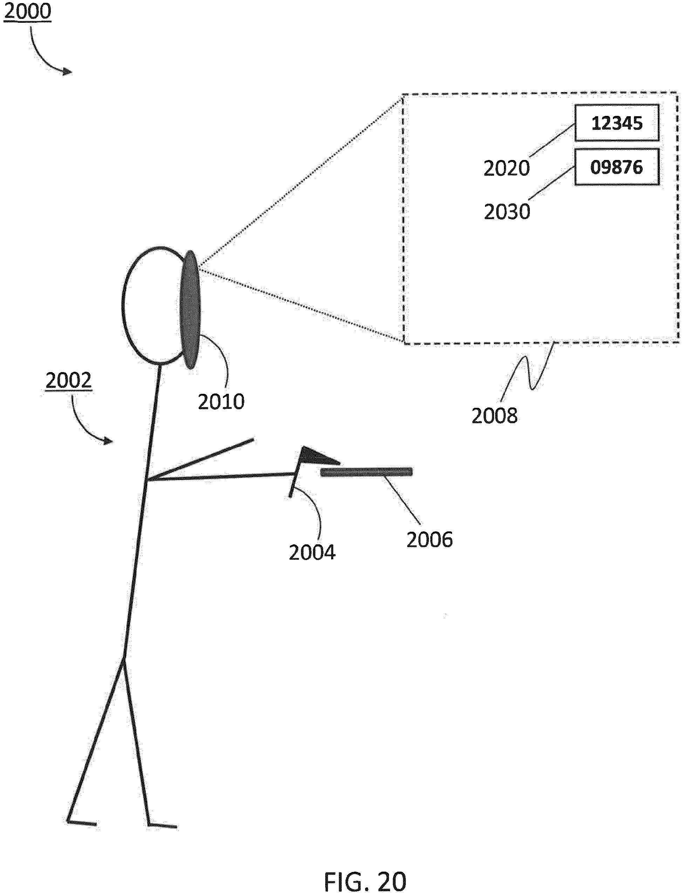

A system 2000 implementing one such embodiment is shown in FIG. 20. In the system 2000, a user 2002 is performing a simulated welding training exercise, such as performing a simulated weld. The user 2002 manipulates a mock welding tool 2004 relative to a welding coupon 2006 to perform the simulated weld. The user's movements are shown in a simulated environment 2008, such as in a virtual reality space, viewed by the user 2002 through a face-mounted display device 2010.

The system 2000 displays a highest score 2020 in the simulated environment 2008. The highest score 2020 is the "best" (typically, the largest numerical) score that the user 2002 previously achieved for this particular welding training exercise. In some exemplary embodiments, scores older than a threshold time period (e.g., 1 month, 6 weeks, 1 year) are discarded as stale and not used in the determination of the highest score 2020. In some exemplary embodiments, the highest score 2020 could be replaced with another benchmark of the user's prior performance, such as the average of some (or all) of the previous performances of the welding training exercise by the user. In some exemplary embodiments, the highest score 2020 could correspond to the "best" score that was previously achieved for the welding training exercise, even if by another user. In this case, the highest score 2020 could correspond to the "best" performance amongst all users in an organization (e.g., company, school, class). In this manner, the highest score 2020 sets a baseline against which the user 2002 can measure his current performance.

The system 2000 also displays a current score 2030 in the simulated environment 2008. The current score 2030 represents the current performance of the user 2002 during the simulated welding training exercise. In some exemplary embodiments, the current score 2030 is updated in real time during the welding training exercise. In some exemplary embodiments, both the highest score 2020 and the current score 2030 are updated in real time, with the highest score 2020 being updated based on historical data, based on progression during the welding training exercise (e.g., a location on the weld path of the simulated weld). In some exemplary embodiments, the highest score 2020 and/or the current score 2030 are only updated periodically. In some exemplary embodiments, the current score 2030 is not displayed until after the user 2002 has completed the simulated welding training exercise.

Preferably, but not necessarily, the highest score 2020 and the current score 2030 are displayed in proximity to one another within the simulated environment 2008, such as within the same quadrant of the simulated environment 2008.

In some exemplary embodiments, the welding training systems/methods rank the performance of multiple related users (e.g., students in a classroom) to encourage competition amongst the various users.

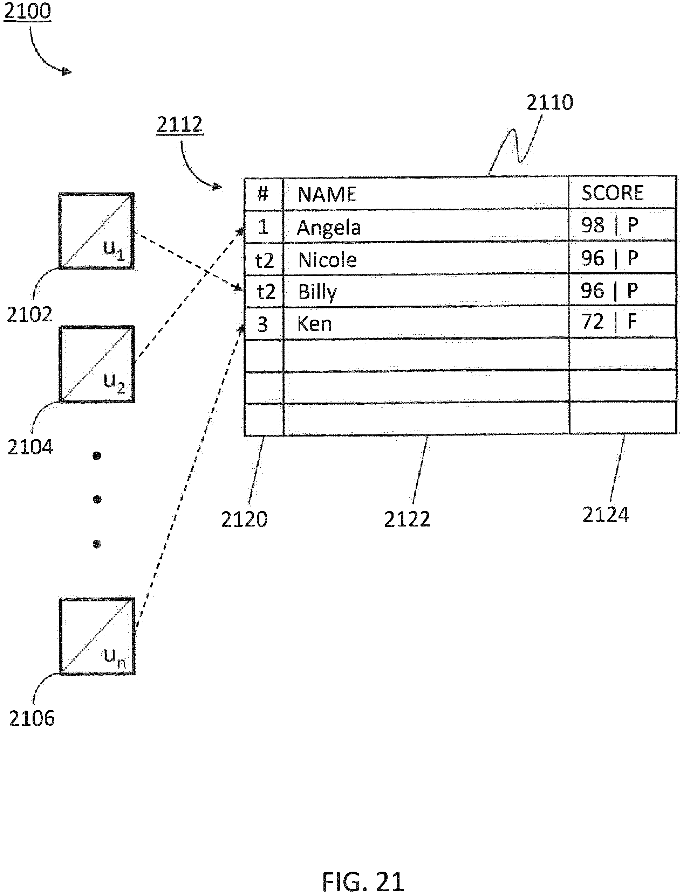

A system 2100 implementing one such embodiment is shown in FIG. 21. The system 2100 includes multiple workstations at which students can perform a welding training exercise (e.g., performing a particular weld according to a particular welding process). As shown in FIG. 21, the system 2100 includes a first workstation 2102 being used by a first user u₁, a second workstation 2104 being used by a second user u₂, and an n^{th} workstation 2106 being used by a user uₙ. While the system 2100 supports any two or more users, typically the system 2100 will represent the performance of many users, such as 3 or more, 6 or more, 9 or more, 12 or more, etc. In some exemplary embodiments, the system 2100 supports between 2-100 users. In some exemplary embodiments, one or more of the workstations, 2102, 2104, 2106 is a multi-user workstation capable of supporting multiple users at the same time.

In the system 2100, each of the users (u₁, u₂, ..., uₙ) is performing the same welding training exercise. Each of the users is assigned a score, as described above, based on their performance of the welding training exercise. The system 2100 collects, compares, ranks, and stores the scores. Furthermore, the system 2100 displays the scores according to their ranking. For example, the system 2100 can display the scores on a large display 2110, which represents a digital leaderboard 2112 for the exercise. The leaderboard 2112 shows the ranked scores, along with other information on the display 2110. In the illustrated embodiment, the leaderboard 2112 displays the ranking 2120 of the user, the name 2122 of the user, and the score 2124 of the user. In some exemplary embodiments, the score 2124 displayed on the leaderboard 2112 also includes an indication as to whether the user passed ("P") or failed ("F") the exercise. Typically, the pass/fail determination is based on whether the score 2124 meets or exceeds a predefined threshold value for the exercise. In some exemplary embodiments, scores below a certain threshold value are not displayed on the leaderboard 2112.

As shown in FIG. 21, the user named Angela (i.e., the user u₂) is in first place with a score of 98 and has passed the welding exercise; the user named Billy (i.e., the user u₁) is tied for second place with a score of 96 and has passed the welding exercise; and the user named Ken (i.e., the user uₙ) is in third place with a score of 72 and has failed the welding exercise.

Ideally, the leaderboard 2112 is displayed at a location where it can be readily seen by most, if not all, of the users. For example, in some exemplary embodiments, the display 2110 is a large monitor (e.g., LCD screen) mounted at the front of the room in which the workstations 2102, 2104, 2106 are situated. In some exemplary embodiments, the leaderboard 2112 is projected onto a surface (e.g., screen, wall, ceiling) visible to the users. In some exemplary embodiments, where the workstations are weld simulators, at least a portion of the leaderboard 2112 is displayed in the simulated environment(s) being generated by the weld simulators.

In some exemplary embodiments, the welding training exercise is a simulated exercise and each of the workstations includes a welding simulator. In some exemplary embodiments, the welding training exercise is a real-world exercise and each of the workstations includes a welding unit.

In some exemplary embodiments, the welding training systems/methods promote competition amongst different groups of users. Examples of such inter-group competition include pitting one class against another class, one school against another school, one organization (e.g., company) against another organization, etc.

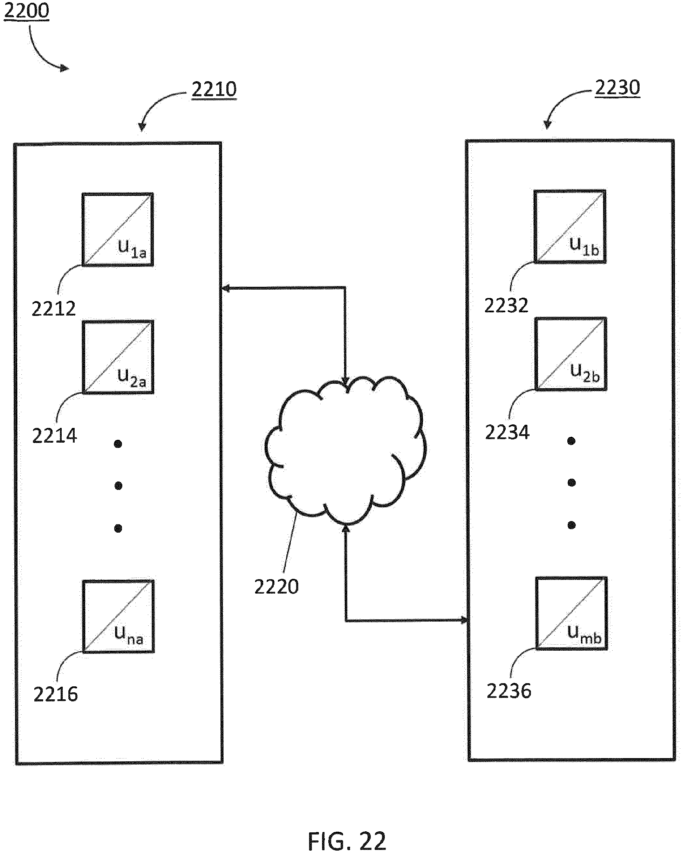

A system 2200 implementing one such embodiment is shown in FIG. 22. The system 2200 is intended to facilitate competition between at last two distinct groups of users, in this case, a first school 2210 and a second school 2230. The first school 2210 includes multiple workstations at which students of the first school 2210 can perform a welding training exercise (e.g., performing a particular weld according to a particular welding process). As shown in FIG. 22, the first school 2210 includes a first workstation 2212 being used by a first student u₁ₐ, a second workstation 2214 being used by a second student u₂ₐ, and an n^{th} workstation 2216 being used by a student uₙₐ. Likewise, the second school 2230 includes multiple workstations at which students of the second school 2230 can perform the welding training exercise. As shown in FIG. 22, the second school 2230 includes a first workstation 2232 being used by a first student u_{1b}, a second workstation 2234 being used by a second student u_{2b}, and an m^{th} workstation 2236 being used by a student u_{mb}. In some exemplary embodiments, n = m. In some exemplary embodiments, one or more of the workstations, 2212, 2214, 2216, 2232, 2234, 2236 is a multi-user workstation capable of supporting multiple users (e.g., students) at the same time.

The students u₁ₐ, u₂ₐ, ... uₙₐ, of the first school 2210 are all local to one another. Likewise, the students u_{1b}, u_{2b}, ... u_{mb} of the second school 2230 are all local to one another. Here, "local" can mean that the students are all in the same room or building. The term "local" can be more generally understood as located within a 1-mile radius of one another. Conversely, in many instances, the schools 2210 and 2230 are remote from one another. Here, "remote" can mean that the schools are located in different cities, states, zip codes, etc. The term "remote" can be more generally understood as separated from one another by a distance of more than 1 mile.

Accordingly, so that information can be shared between the schools 2210 and 2230, the system 2200 supports communication between the schools 2210, 2230 over a network 2220. In some exemplary embodiments, the network 2220 is the Internet. In some exemplary embodiments, the network 2220 is any suitable communications network, such as a cellular network or a satellite network.

In the system 2200, a score is computed for each user of each school based on a performance of the user during the exercise. In particular, the system 2200 collects, processes, and stores the scores for each of the users u₁ₐ, u₂ₐ, ..., uₙₐ of the first school 2210 and each of the users u_{1b}, u_{2b}, ..., u_{mb} of the second school 2230.

The processing by the system 2200 can be carried out by logic (e.g., a general-purpose computer and related equipment, such as a cable modem, programmed to perform the processing) situated at the first school 2210; the second school 2230; both schools 2210, 2230; or neither of the schools 2210, 2230 (i.e., be remote from both schools). As noted above, information can be sent to/from the schools and the logic over the network 2220.

The processing by the system 2200 can involve calculating an aggregate score for each school 2210, 2230. In some exemplary embodiments, the aggregate score for a school 2210, 2230 is calculated as the summation of the individual scores of the students of the school. This approach may not work when one of the schools has more or fewer students than the other school. In some exemplary embodiments, the aggregate score for a school 2210, 2230 is calculated as the average of the individual scores of the students of the school. In some exemplary embodiments, individual scores for a user may be adjusted (e.g., weighted) based on the experience level of the user. In some exemplary embodiments, statistical analysis may be performed on the individual scores to remove any outliers from the calculation of the aggregate scores.

The aggregate score of each school 2210, 2230 can be displayed in a manner that is readily visible to schools. For example, a digital leaderboard (such as the leaderboard 2112 described above) can be used to display the aggregate scores at each of the schools 2210, 2230. In this manner, the students at the first school 2210 can gauge their performance against the students at the second school 2230, and vice versa. In some exemplary embodiments, the displayed leaderboard could also include the individual scores of some, or all, of the students. In some exemplary embodiments, where the workstations are weld simulators, at least a portion of the leaderboard is displayed in the simulated environment(s) being generated by the weld simulators.

In some exemplary embodiments, the results on the leaderboard are updated periodically (e.g., every 10 seconds). In some exemplary embodiments, the results on the leaderboard are updated in response to an event (e.g., one of the students completing the exercise).

As noted above, a user's performance of a welding training exercise (e.g., in the form of a numerical score) can be used to control access to other training exercises or other variations of the same training exercise intended to develop or otherwise reinforce related skills.

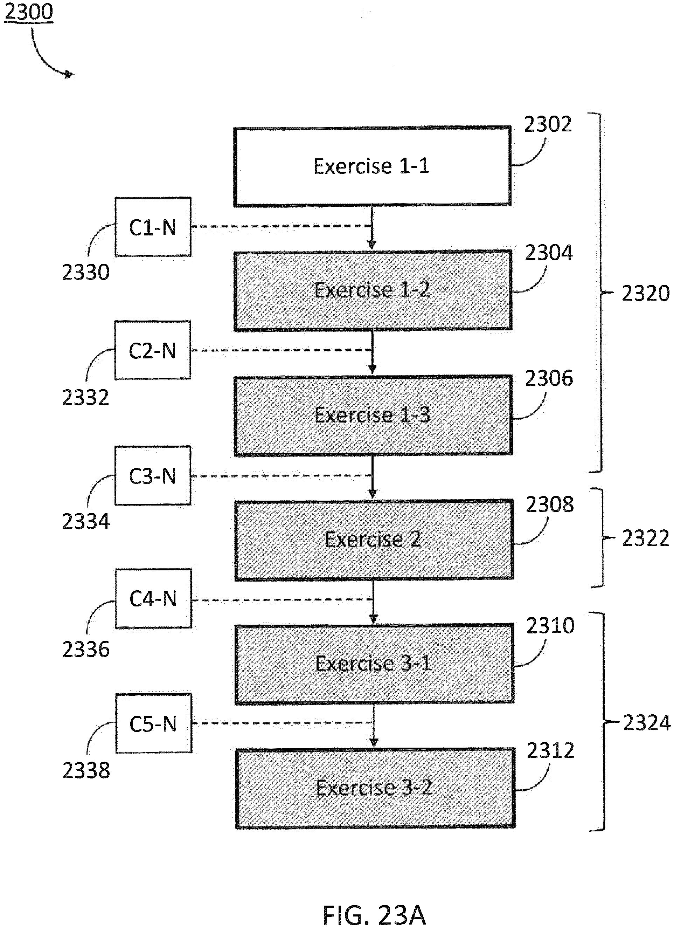

A system 2300 implementing one such embodiment is shown in FIGS. 23A-23C. In the system 2300, one or more skills are intended to be taught to students. To learn the skill(s), the student is expected to successfully complete a series of welding training exercises. In the illustrated embodiment, the exercises include a first exercise 2302, a second exercise 2304, a third exercise 2306, a fourth exercise 2308, a fifth exercise 2310, and a sixth exercise 2312. Some of the exercises may be related to one another, for example, with respect to the skill they are teaching, the materials involved, etc. These related exercises may constitute a welding training module. In the illustrate embodiment, the first exercise 2302, the second exercise 2304, and the third exercise 2306 form a first module 2320; the fourth exercise 2308 forms a second module 2322; and the fifth exercise 2310 and the sixth exercise 2312 form a third module 2324. The collection of exercises or modules can form part of a broader welding training curriculum.

In the system 2300, various exercises are "locked," such that they are not accessible to the students. In particular, the system 2300 has predetermined conditions that must be met before these locked exercises can be accessed. In this manner, access to exercises that require proficiency of a certain skill can be restricted until the student demonstrates the required proficiency of the skill. This is also useful in that it presents a sense of challenge to the student, for example, that he must achieve a particular level of performance before he is allowed to advance to the next area/level.

Initially, the first exercise 2302 is unlocked, while each of the second exercise 2304, the third exercise 2306, the fourth exercise 2308, the fifth exercise 2310, and the sixth exercise 2312 is locked, as shown in FIG. 23A. A first condition 2330 must be met with respect to the first exercise 2302 to unlock the second exercise 2304. Similarly, a second condition 2332 must be met with respect to the second exercise 2304 to unlock the third exercise 2306; a third condition 2334 must be met with respect to the third exercise 2306 to unlock the fourth exercise 2308; a fourth condition 2336 must be met with respect to the fourth exercise 2308 to unlock the fifth exercise 2310; and fifth condition 2338 must be met with respect to the fifth exercise 2310 to unlock the sixth exercise 2312.

Each of the conditions can be set by an administrator of the system 2300, such as an instructor overseeing the welding training exercises. The conditions can be adjusted from student-to-student or for different types/classes of students.

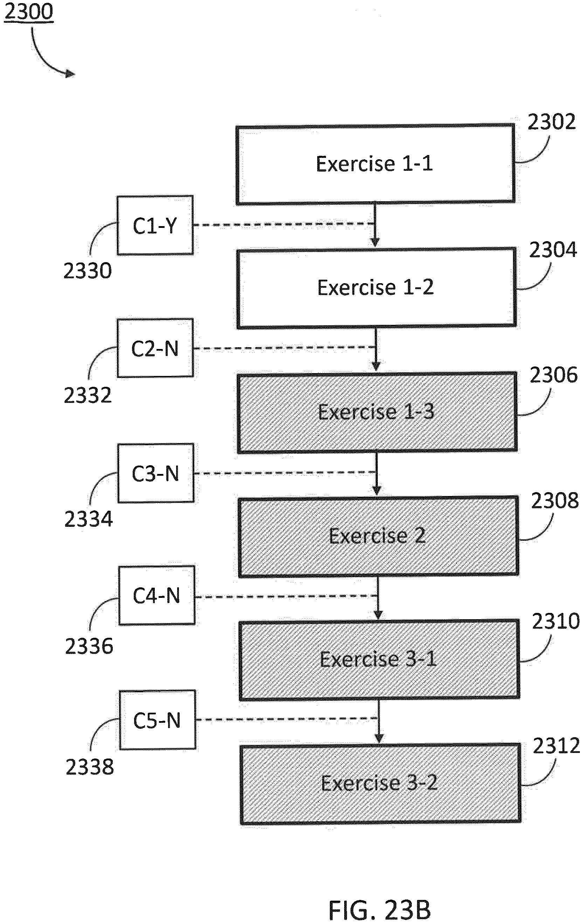

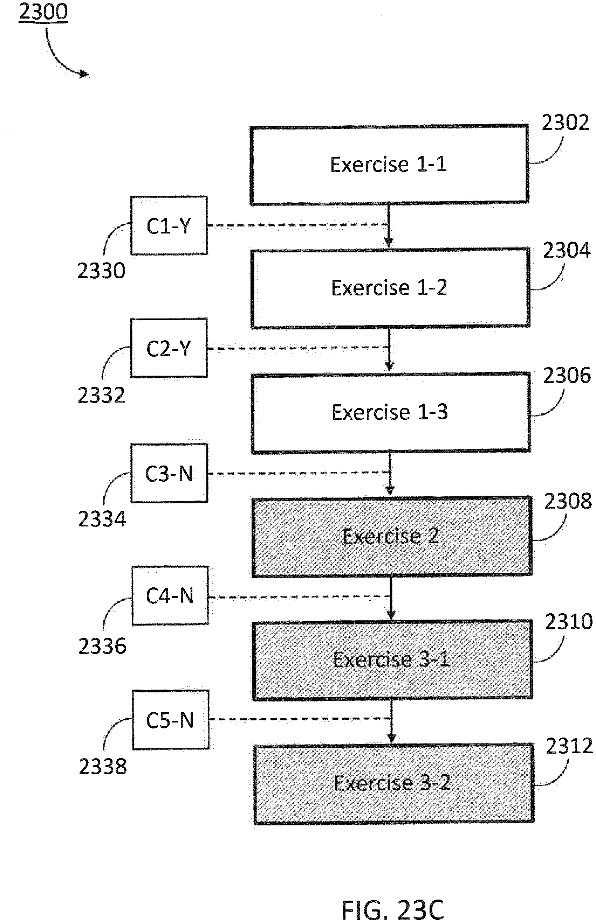

Upon satisfying the first condition 2330, the second exercise 2304 becomes unlocked, as shown in FIG. 23B. In this example, the first condition 2330 was set to "achieve a performance score on the first exercise 2302 of at least 90." Then, upon satisfying the second condition 2332, the third exercise 2306 becomes unlocked, as shown in FIG. 23C. In this example, the second condition 2332 was set to "achieve a performance score on the second exercise 2304 greater than the performance score achieved on the first exercise 2302." This process is repeated, with access to subsequent exercises requiring satisfaction of other conditions. In some exemplary embodiments, one or more of the conditions can be the same as one or more of the other conditions.

In the context of the gaming concepts discussed herein, the student can be rewarded for unlocking an exercise. For example, a video and/or audio clip could be played in recognition of the student's accomplishment. As another example, additional portions of an ongoing narrative could be played and/or displayed to the student. As yet another example, rewards in the form of points, badges or other digital collectibles, etc. could be presented to the student.

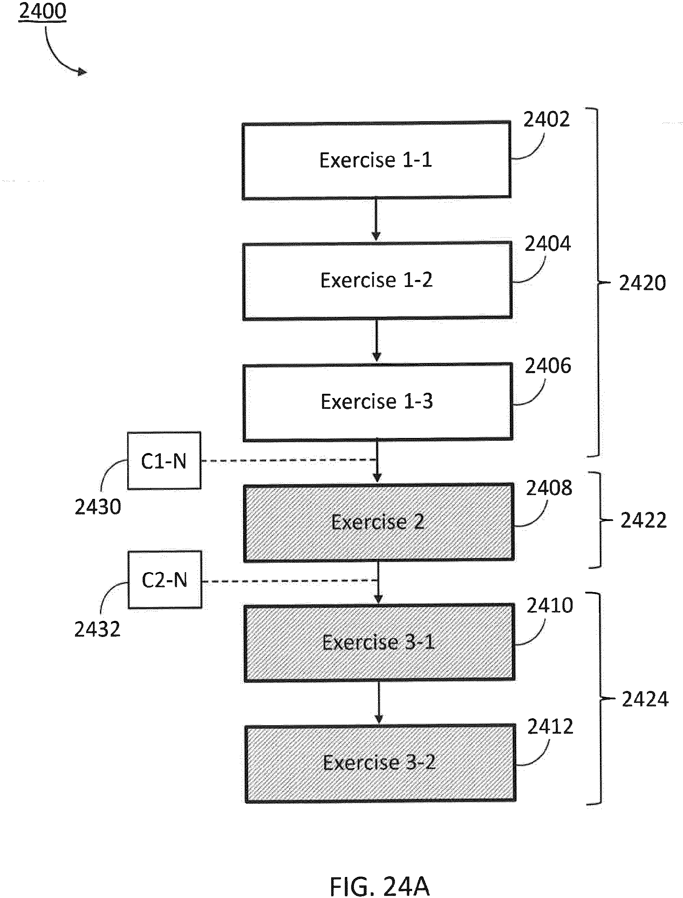

A system 2400 implementing an alternative embodiment is shown in FIGS. 24A-24C. In the system 2400, one or more skills are intended to be taught to students. To learn the skill(s), the student is expected to successfully complete a series of welding training exercises. In the illustrated embodiment, the exercises include a first exercise 2402, a second exercise 2404, a third exercise 2406, a fourth exercise 2408, a fifth exercise 2410, and a sixth exercise 2412. Some of the exercises may be related to one another, for example, with respect to the skill they are teaching, the materials involved, etc. These related exercises may constitute a welding training module. In the illustrate embodiment, the first exercise 2402, the second exercise 2404, and the third exercise 2406 form a first module 2420; the fourth exercise 2408 forms a second module 2422; and the fifth exercise 2410 and the sixth exercise 2412 form a third module 2424. The collection of exercises or modules can form part of a broader welding training curriculum.

In the system 2400, various modules are "locked," such that they are not accessible to the students. In particular, the system 2400 has predetermined conditions that must be met before these locked modules can be accessed. In this manner, access to modules that require proficiency of a certain skill can be restricted until the student demonstrates the required proficiency of the skill. This is also useful in that it presents a sense of challenge to the student, for example, that he must achieve a particular level of performance before he is allowed to advance to the next area/level.

Initially, the first module 2420 is unlocked, while each of the second module 2422 and the third module 2424 is locked, as shown in FIG. 24A. A first condition 2430 must be met with respect to the first module 2420 to unlock the second module 2422 (and access the exercise(s) therein). Similarly, a second condition 2432 must be met to unlock the third module 2424 (and access the exercise(s) therein).

Each of the conditions can be set by an administrator of the system 2400, such as an instructor overseeing the welding training exercises. The conditions can be adjusted from student-to-student or for different types/classes of students.

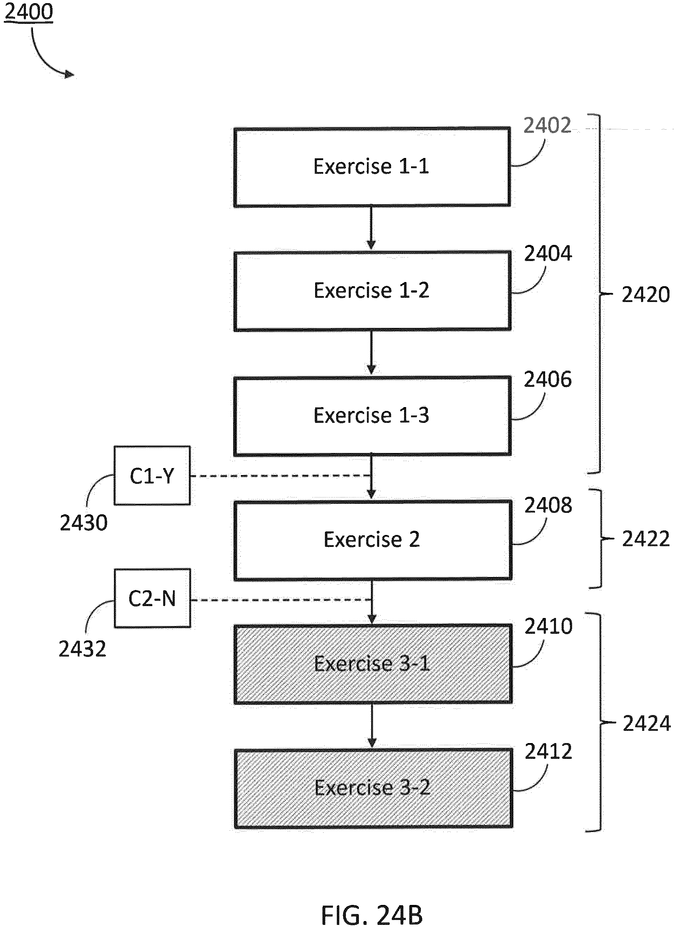

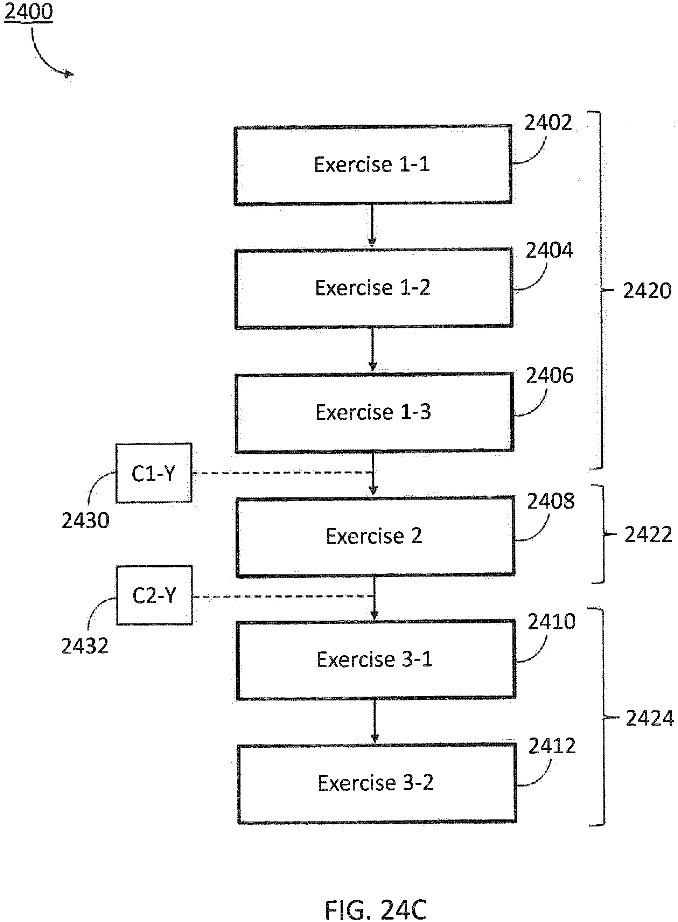

Upon satisfying the first condition 2430, the second module 2422 becomes unlocked, as shown in FIG. 24B. In this example, the first condition 2430 was set to "complete each of the exercises in the first module 2420 with a performance score of at least 85." Then, upon satisfying the second condition 2432, the third module 2424 becomes unlocked, as shown in FIG. 24C. In this example, the second condition 2432 was set to "complete the exercise in the second module 2422 with a performance score of at least 80 three times in a row." This process can be repeated, with access to subsequent modules (and the exercise(s) therein) requiring satisfaction of other conditions. In some exemplary embodiments, one or more of the conditions can be the same as one or more of the other conditions.

In the context of the gaming concepts discussed herein, the student can be rewarded for unlocking a module. For example, a video and/or audio clip could be played in recognition of the student's accomplishment. As another example, additional portions of an ongoing narrative could be played and/or displayed to the student. As yet another example, rewards in the form of points, badges or other digital collectibles, etc. could be presented to the student.

While the embodiments discussed herein have been related to the systems and methods discussed above, these embodiments are intended to be exemplary and are not intended to limit the applicability of these embodiments to only those discussions set forth herein. The control systems and methodologies discussed herein are equally applicable to, and can be utilized in, systems and methods related to the simulation of arc welding, laser welding, brazing, soldering, plasma cutting, waterjet cutting, laser cutting, and any other systems or methods using similar control methodology, without departing from the spirit and scope of the above discussed inventions. The embodiments and discussions herein can be readily incorporated into any of these systems and methodologies by those of skill in the art.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiments disclosed, but that the invention will include all embodiments falling within the scope of the appended claims.

**REFERENCE NUMBERS**

| | | | |
|---|---|---|---|
| 100 | system | 163 | resistive tip |
| 110 | programmable processor-based subsystem | 170 | table |
| | | 171 | adjustable table |
| 111 | central processing unit | 172 | base |
| 115 | graphics processing unit | 173 | adjustable arm |
| 116 | compute unified device architecture | 174 | vertical post |
| | | 175 | pipe welding coupon |
| 117 | shader | 176 | root |
| 118 | video output | 177 | connection portion |
| 119 | video output | 180 | welding coupon |
| 120 | spatial tracker | 900 | welding helmet |
| 121 | magnetic source | 910 | earbud speaker |
| 122 | sensor | 1201 | physical interface |
| 123 | disk | 1202 | torch and clamp model |
| 124 | power source | 1203 | environment model |
| 125 | cable | 1204 | sound content functionality |
| 126 | processor tracking unit | 1205 | welding sound |
| 130 | welding user interface | 1206 | table model |
| 131 | button | 1207 | internal architecture functionality |
| 132 | joystick | 1208 | calibration functionality |
| 133 | knob | 1210 | coupon model |
| 134 | knob | 1211 | welding physics |
| 135 | simulated welding console | 1212 | internal physics adjustment tool |
| 136 | knob | 1213 | graphical user interface functionality |
| 137 | knob | | |
| 140 | face-mounted display device | 1214 | graphing functionality |
| 150 | observer display device | 1215 | student report functionality |
| 151 | welding parameter | 1216 | renderer |
| 152 | welding discontinuity state | 1217 | bead rendering |
| 153 | user selection | 1218 | 3D texture |
| 160 | mock welding tool | 1219 | visual cues functionality |
| 161 | holder | 1220 | scoring and tolerance functionality |
| 162 | stick electrode | 1221 | tolerance editor |
| 1222 | special effect | 2104 | second workstation |
| 1300 | method | 2106 | nth workstation |
| 1310 | step | 2110 | display |
| 1320 | step | 2112 | digital leaderboard |
| 1330 | step | 2120 | ranking |
| 1340 | step | 2122 | name |
| 1350 | step | 2124 | score |
| 1400 | flat welding coupon | 2200 | system |
| 1410 | flat top surface | 2210 | first school |
| 1420 | welding element displacement map | 2212 | first workstation |
| | | 2214 | second workstation |
| 1421 | wexel | 2216 | n^{th} workstation |
| 1600 | corner welding coupon | 2220 | network |
| 1610 | surface | 2230 | second school |
| 1620 | surface | 2232 | first workstation |
| 1700 | pipe welding coupon | 2234 | second workstation |
| 1701 | pipe piece | 2236 | m^{th} workstation |
| 1702 | pipe piece | 2300 | system |
| 1703 | root joint | 2302 | first exercise |
| 1704 | attachment piece | 2304 | second exercise |
| 1710 | curved surface | 2306 | third exercise |
| 1910 | rectangular bar | 2308 | fourth exercise |
| 1920 | particle | 2310 | fifth exercise |
| 1930 | particle height | 2312 | sixth exercise |
| 1940 | shaded rectangle | 2320 | first module |
| 2000 | system | 2322 | second module |
| 2002 | user | 2324 | third module |
| 2004 | mock welding tool | 2330 | first condition |
| 2006 | welding coupon | 2332 | second condition |
| 2008 | simulated environment | 2334 | third condition |
| 2010 | face-mounted display device | 2336 | fourth condition |
| 2020 | highest score | 2338 | fifth condition |
| 2030 | current score | 2400 | system |
| 2100 | system | 2402 | first exercise |
| 2102 | first workstation | 2404 | second exercise |
| 2406 | third exercise | 2422 | second module |
| 2408 | fourth exercise | 2424 | third module |
| 2410 | fifth exercise | 2430 | first condition |
| 2412 | sixth exercise | 2432 | second condition |
| 2420 | first module | | |

## Claims

1. A welding simulator comprising:
a display;
a mock welding tool (160, 2004);
a coupon (175, 180, 1400, 1600, 1700, 2006); and
logic comprising a memory storing machine-readable instructions and a processor for executing the instructions to:
generate a simulated environment;
track movements of the mock welding tool relative (160, 2004) to the coupon by a user (2002) during a first simulated welding exercise;
display the simulated environment and the movements on the display;
determine values for a plurality of performance parameters based on the movements; and
calculate a performance score of the user (2002) for the first simulated welding exercise by comparing the values of the performance parameters to predefined values.

2. The welding simulator of claim 1, wherein the logic permits the user to perform a second simulated welding exercise only if the performance score of the user (2002) meets a predefined threshold score for the first simulated welding exercise, and/or wherein the logic permits the user to perform a second simulated welding exercise only if the performance score of the user (2002)meets a predefined threshold score for the first simulated welding exercise over a number of consecutive performances of the first simulated welding exercise.

3. The welding simulator of claim 1 or 2, wherein the logic causes the performance score of the user (2002) to be displayed on the display during a performance of the first simulated welding exercise by another user (2002), and/or wherein the logic causes the performance score of the user to be displayed on the display during a subsequent performance of the first simulated welding exercise by the user.

4. The welding simulator of any of the claims 1 to 3, wherein the logic causes every performance score calculated for the first simulated welding exercise over a period of time to be stored; and
wherein the logic causes a highest of the stored performance scores to be displayed on the display during each performance of the first simulated welding exercise over the period of time.

5. The welding simulator of any of the claims 1 to 4, wherein the logic causes every performance score calculated for the first simulated welding exercise over a period of time to be stored; and
wherein the logic causes all of the stored performance scores to be displayed on a common display viewable by multiple users (2002) at the same time, and/or wherein, preferably, the stored performance scores are displayed in descending order.

6. The welding simulator of any of the claims 1 to 5, wherein the logic causes every performance score calculated for the first simulated welding exercise over a period of time to be stored; and
wherein the logic causes a given number of the stored performance scores to be displayed on a common display viewable by multiple users (2002) at the same time, and/or wherein, preferably, the given number of the stored performance scores are displayed in descending order.

7. The welding simulator of any of the claims 1 to 6, wherein at least one of the performance parameters is a distance between a tip of the mock welding tool and the coupon, and/or
wherein at least one of the performance parameters is a weld angle, and/or
wherein at least one of the performance parameters is a travel angle, and/or
wherein at least one of the performance parameters is a travel speed of the mock welding tool during the first simulated welding exercise.

8. The welding simulator of any of the claims 1 to 7, wherein the display is part of a welding helmet (900), and/or
wherein the simulated environment is a virtual reality environment.

9. The welding simulator of any of the claims 1 to 8, wherein the simulated environment is an augmented reality environment.

10. A welding training system (100, 2000, 2100, 2200, 2300, 2400) comprising:
a first welding simulator comprising:
a first display;
a first mock welding tool (160, 2004); and
a first coupon (175, 180, 1400, 1600, 1700, 2006);
a second welding simulator comprising:
a second display;
a second mock welding tool; and
a second coupon (175, 180, 1400, 1600, 1700, 2006); and
logic comprising a memory storing machine-readable instructions and a processor for executing the instructions to:
generate a simulated environment;
track first movements of the first mock welding tool (160, 2004) relative to the first coupon (175, 180, 1400, 1600, 1700, 2006) by a first user (2002)during a simulated welding exercise;
display the simulated environment and the first movements on the first display;
determine first values for a plurality of performance parameters based on the first movements;
calculate a first performance score of the first user (2002) for the simulated welding exercise by comparing the first values of the performance parameters to corresponding predefined values;
track second movements of the second mock welding tool (160, 2004) relative to the second coupon (175, 180, 1400, 1600, 1700, 2006) by a second user (2002) during the simulated welding exercise;
display the simulated environment and the second movements on the second display;
determine second values for the performance parameters based on the second movements; and
calculate a second performance score of the second user for the simulated welding exercise by comparing the second values of the performance parameters to the predefined values.

11. The welding training system (100, 2000, 2100, 2200, 2300, 2400) of claim 10, wherein the logic causes a progress of the first user (2002) performing the simulated welding exercise to be displayed on the second display, and/or
wherein the logic causes a progress of the second user (2002) performing the simulated welding exercise to be displayed on the first display.

12. The welding training system (100, 2000, 2100, 2200, 2300, 2400) of claim 10 or 11, wherein the logic determines the larger of the first performance score and the second performance score is a winning score; and
wherein the logic causes the winning score to be displayed on both the first display and the second display.

13. The welding training system (100, 2000, 2100, 2200, 2300, 2400) of any of the claim 10 to 12, wherein if the logic determines the first user completes the simulated welding exercise before the second user (2002), the logic causes the first performance score to be displayed on the second display, and/or
wherein if the logic determines the second user completes the simulated welding exercise before the first user (2002), the logic causes the second performance score to be displayed on the first display.

14. A welding training system (100, 2000, 2100, 2200, 2300, 2400) comprising:
a first training site, at which are located:
a first welding simulator comprising:
a first display;
a first mock welding tool (160, 2004); and
a first coupon (175, 180, 1400, 1600, 1700, 2006);
a second welding simulator comprising:
a second display;
a second mock welding tool (160, 2004); and
a second coupon (175, 180, 1400, 1600, 1700, 2006); and
first logic comprising a memory storing machine-readable instructions and a processor for executing the instructions to:
generate a first simulated environment;
track first movements of the first mock welding tool (160, 2004) relative to the first coupon (175, 180, 1400, 1600, 1700, 2006) by a first user (2002) during a simulated welding exercise;
display the first simulated environment and the first movements on the first display;
determine first values for a plurality of performance parameters based on the first movements;
calculate a first performance score of the first user (2002) for the simulated welding exercise by comparing the first values of the performance parameters to corresponding predefined values;
track second movements of the second mock welding tool (160, 2004) relative to the second coupon (175, 180, 1400, 1600, 1700, 2006) by a second user (2002) during the simulated welding exercise;
display the first simulated environment and the second movements on the second display;
determine second values for the performance parameters based on the second movements; and
calculate a second performance score of the second user (2002) for the simulated welding exercise by comparing the second values of the performance parameters to the predefined values; and
a second training site, at which are located:
a third welding simulator comprising:
a third display;
a third mock welding tool (160, 2004); and
a third coupon (175, 180, 1400, 1600, 1700, 2006);
a fourth welding simulator comprising:
a fourth display;
a fourth mock welding tool (160, 2004); and
a fourth coupon (175, 180, 1400, 1600, 1700, 2006); and
second logic comprising a memory storing machine-readable instructions and a processor for executing the instructions to:
generate a second simulated environment;
track third movements of the third mock welding tool (160, 2004) relative to the third coupon by a third user (2002) during the simulated welding exercise;
display the second simulated environment and the third movements on the third display;
determine third values for a plurality of performance parameters based on the third movements;
calculate a third performance score of the third user (2002) for the simulated welding exercise by comparing the third values of the performance parameters to the predefined values;
track fourth movements of the fourth mock welding tool relative to the fourth coupon (175, 180, 1400, 1600, 1700, 2006) by a fourth user (2002) during the simulated welding exercise;
display the second simulated environment and the fourth movements on the fourth display;
determine fourth values for the performance parameters based on the fourth movements; and
calculate a fourth performance score of the fourth user for the simulated welding exercise by comparing the fourth values of the performance parameters to the predefined values,
wherein the first logic is operable to send at least one of the first performance score and the second performance score over a network to the second logic; and
wherein the second logic is operable to send at least one of the third performance score and the fourth performance score over the network to the first logic.

15. The welding training system (100, 2000, 2100, 2200, 2300, 2400) of claim 14, wherein the first logic is operable to sum the first performance score and the second performance score into an aggregate score, and
wherein the first logic is operable to send the aggregate score over the network to the second logic, and/or
wherein the second logic is operable to sum the third performance score and the fourth performance score into an aggregate score, and
wherein the second logic is operable to send the aggregate score over the network to the first logic.

16. The welding training system (100, 2000, 2100, 2200, 2300, 2400) of claim 14 or 15, wherein the first logic is operable to calculate an average score from the first performance score and the second performance score, and
wherein the first logic is operable to send the average score over the network to the second logic, and/or
wherein the second logic is operable to calculate an average score from the third performance score and the fourth performance score, and
wherein the second logic is operable to send the average score over the network to the second logic.

17. The welding training system (100, 2000, 2100, 2200, 2300, 2400) of any of the claims 14 to 16, wherein the first site and the second site are remote from one another, and/or
wherein the first welding simulator and the second welding simulator are local to one another, and/or
wherein the third welding simulator and the fourth welding simulator are local to one another.

18. The welding training system (100, 2000, 2100, 2200, 2300, 2400) of any of the claims 14 to 17, wherein the network is the Internet.
